# FASCICULE DE BREVET EUROPEEN

(11) **EP 3 164 904 B1**
(45) Date de publication et mention de la délivrance du brevet: **31.03.2021**
(21) Numéro de dépôt: 15745537.9
(22) Date de dépôt: 01.07.2015
(51) Int. Cl.: H01M 10/0525, H01M 10/056, H01M 10/0585

(54) **BATTERIE ENTIEREMENT SOLIDE COMPRENANT UN ELECTROLYTE SOLIDE ET UNE COUCHE DE MATERIAU POLYMERE**
FESTKÖRPERBATTERIE AUS EINEM FESTELEKTROLYT UND EINER SCHICHT AUS POLYMERMATERIAL
ALL-SOLID BATTERY INCLUDING A SOLID ELECTROLYTE AND A LAYER OF POLYMER MATERIAL

(30) Priorité: 01.07.2014 FR 1456272
(43) Date de publication de la demande: 10.05.2017
(73) Titulaire: I-TEN, 69570 Dardilly (FR)
(72) Inventeur: GABEN, Fabien, 69570 Dardilly (FR)
(74) Mandataire: Schmidt, Martin Peter
(86) Numéro de dépôt international: PCT/FR2015/051819
(87) Numéro de publication internationale: WO 2016/001588

(56) Documents cités:
- WO-A1-2013/064779
- FR-A1- 2 880 198
- FR-A1- 2 893 623
- JP-A- 2008 171 588
- US-A1- 2007 015 061

## Description

### Domaine technique

La présente invention se rapporte au domaine des batteries et notamment des batteries à ions de lithium. Elle concerne plus particulièrement les batteries à ions de lithium (« batteries Li-ion ») entièrement solides, et un nouveau procédé de fabrication de telles batteries.

### Etat de la technique

On connait des modes de fabrication des batteries à ions de lithium (« batteries Li-ion ») présentés dans de nombreux articles et brevets ; l'ouvrage « Advances in Lithium-Ion Batteries » (ed. W. van Schalkwijk et B. Scrosati), paru en 2002 (Kluever Academic / Plenum Publishers) en donne un bon état des lieux. Les électrodes des batteries Li-ion peuvent être fabriquées à l'aide de techniques d'impression ou de dépôt connues de l'homme du métier, et notamment par enduction au rouleau (« roll coating »), par racle (« doctor blade »), ou encore par coulage en bande (« tape casting »).

On connait également des batteries Li-ion en couches minces, entièrement solides dont l'architecture est planaire c'est-à-dire qu'elles sont essentiellement constituées d'un ensemble de trois couches formant une cellule élémentaire de batterie : une couche d'anode et une couche de cathode séparées par une couche d'électrolyte.

Elles utilisent des anodes en lithium métallique, et des films d'oxynitrure de phosphate lithié comme électrolyte. Cependant, les fortes variations de volume de l'anode en lithium lors des étapes de charge et décharge font qu'il est extrêmement difficile d'encapsuler correctement la batterie, sans risque de perte d'étanchéité de l'encapsulation.

Dans le domaine des batteries à ions de lithium, des électrolytes polymériques peuvent être employés. Par exemple, FR 2 893 623 A1 divulgue la préparation d'une couche épaisse de polymère réticulé ayant des groupes ioniques, d'environ 100 µm d'épaisseur, utilisable comme électrolyte polymère dans une batterie à ions de lithium. US 2007/015 061 divulgue une batterie en couches minces comprenant une couche d'électrolyte « dur » et une couche d'électrolyte « mou », tel qu'un électrolyte polymérique déposée sur la couche d'électrolyte « dur ». JP 2008 171 588 A décrit un procédé de fabrication ainsi qu'une batterie à ions de lithium comprenant un substrat conducteur sur lequel est déposée une couche épaisse d'électrode positive, un substrat conducteur sur lequel est déposée une couche d'électrode négative, une couche d'électrolyte solide déposée sur une couche d'électrode positive et/ou sur une couche d'électrode négative et une couche dite « intermédiaire » à base d'un polymère conducteur d'ions lithium ou un liquide ionique, disposée entre les deux couches d'électrolytes, ou entre une couche d'électrolyte et une couche d'électrode positive ou entre une couche d'électrolyte et une couche d'électrode négative. Plus récemment de nouvelles architectures de batteries entièrement solides, constituées d'empilement de couches minces ont été proposées. Ces batteries sont constituées d'un ensemble rigide et monobloc d'un ensemble de cellules élémentaires connectées en parallèle. Ces batteries utilisent des anodes stables dimensionnellement afin de garantir l'efficacité de l'encapsulation, et permettre la réalisation de structures tridimensionnelles, avec de bien meilleures densités d'énergie surfacique que les architectures planaires. De telles batteries sont décrites dans les documents WO 2013/064779 A1 ou WO 2012/064777 A1. Les batteries décrites dans ces documents ne contiennent pas d'électrolyte liquide à base de solvant organique, leur structure est en couches minces entièrement solide, sans porosité dans les couches d'électrodes afin de garantir de bonnes propriétés de stabilité de la batterie dans le temps. Le procédé de fabrication de ces batteries, également décrit dans les documents WO 2013/064779 A1 ou WO 2012/064777 A1, présente de nombreux avantages car il permet de réaliser des assemblages multicouches, de couches minces et donc peu résistives, ce qui permet de conserver des performances en terme de puissance.

Cependant, dans certains cas, le procédé de fabrication de telles batteries peut présenter quelques limites en fonction des matériaux utilisés, notamment pour l'électrolyte. En effet, les verres conducteurs ioniques peuvent être difficiles à mettre en oeuvre. Par exemple, les électrolytes solides, tels que le LiPON ou les borates lithiés ont une température de transition vitreuse relativement basse, généralement comprise environ entre 250 et 300°C : ainsi lors de l'étape d'assemblage de la batterie par recuit sous pression des différentes couches, les matériaux d'électrolytes peuvent cristalliser partiellement, ce qui peut modifier leur propriété de conduction ionique. De la même manière, lorsque l'électrolyte solide à base de phosphates lithiés est utilisé, il peut être intéressant de différencier les compositions chimiques des électrolytes au contact des anodes et des cathodes afin d'optimiser les performances des électrolytes.

Cependant, l'utilisation de deux formulations d'électrolytes à base de phosphates lithiés déposées sur chacune des faces des électrodes, peut donner lieu à l'apparition de Un autre but de l'invention est de fabriquer des batteries en couches minces par un procédé pouvant être mis en oeuvre industriellement de manière assez simple.

### Objets de l'invention

Un premier objet de l'invention concerne un procédé de fabrication d'une batterie en couches minces entièrement solide comprenant les étapes successives suivantes :
a) on dépose une couche comprenant au moins un matériau d'anode (appelée ici
   « couche de matériau d'anode ») sur son substrat conducteur, de préférence sélectionné dans le groupe formé par une feuille métallique, une bande métallique, une feuille isolante métallisée, une bande isolante métallisée, un film isolant métallisé, lesdits substrats conducteurs, ou leurs éléments conducteurs, pouvant servir comme collecteur de courant anodique ;
b) on dépose une couche comprenant au moins un matériau de cathode (appelée ici « couche de matériau de cathode ») sur son substrat conducteur, de préférence sélectionné dans le groupe formé par une feuille métallique, une bande métallique, une feuille isolante métallisée, une bande isolante métallisée, un film isolant métallisé, lesdits substrats conducteurs, ou leurs éléments conducteurs, pouvant servir comme collecteur de courant cathodique, étant entendu que les étapes a) et b) peuvent être inversées ;
c) on dépose une couche comprenant au moins un matériau d'électrolyte solide (appelée ici « couche de matériau d'électrolyte ») sur au moins une couche obtenue à l'étape a) et/ou b) ;
d) on dépose une couche d'un matériau polymère réticulé comportant des groupements ioniques dont l'épaisseur est inférieure à 10 µm, de préférence inférieure à 5 µm, et encore plus préférentiellement inférieure à 2 µm :
   ∘ soit sur la couche de matériau d'anode revêtue d'une couche de matériau d'électrolyte solide et/ou sur la couche de matériau de cathode revêtue ou non d'une couche de matériau d'électrolyte solide ;
   ∘ soit sur la couche de matériau de cathode revêtue d'une couche de matériau d'électrolyte solide et/ou sur la couche de matériau d'anode revêtue ou non d'une couche de matériau d'électrolyte solide ;
e) on empile face sur face successivement une couche de matériau d'anode obtenue à l'étape a), c) ou d) avec une couche de matériau de cathode obtenue à l'étape b), c) ou d), étant entendu que l'empilement comprend au moins une couche de matériau d'électrolyte solide obtenue à l'étape c) et au moins une couche d'un matériau polymère réticulé obtenue à l'étape d) ;
f) on effectue un traitement thermique et/ou une compression mécanique de l'empilement obtenu à l'étape e) pour obtenir une batterie en couches minces entièrement solide.

Le matériau polymère réticulé est de préférence choisi parmi les polyméthacrylates de méthyle, les polyamines, les polyimides ou les polysiloxanes.

De préférence, les groupements ioniques du matériau polymère sont choisis parmi les cations suivants : l'imidazolium, le pyrazolium, le tétrazolium le pyridinium, le pyrrolidinium, tel que le n-propyl-n-methylpyrrolidinium (appelé aussi PYR₁₃) ou le n-butyl-n-methylpyrrolidinium (appelé aussi PYR₁₄), l'ammonium, le phosphonium ou le sulfonium ; et/ou parmi les anions suivants : le bis(trifluoromethane)sulfonimide, le bis(fluorosulfonyl)imide, ou le n-(nonafluorobutanesulfonyle)-n-(trifluoromethanesulfonyle)-imide.

Dans un mode de réalisation particulier, le matériau polymère réticulé est obtenu par une étape de polymérisation d'un mélange de monomères et/ou oligomères et/ou pré-polymères comprenant un ou plusieurs groupements polymérisables par voie thermique ou photochimique, ledit mélange de monomères et/ou oligomères et/ou pré-polymères comprenant un ou plusieurs groupements réactifs permettant le greffage desdits groupements ioniques.

De préférence, la polymérisation par voie thermique et/ou photochimique est réalisée directement sur la ou les couche(s) d'anodes, de cathodes et/ou d'électrolytes.

Avantageusement, le dépôt du matériau polymère réticulé comportant des groupements ioniques est réalisé parmi l'une au moins des techniques suivantes : par trempage-retrait (dip-coating), par trempage-tournette (spin-coating), enduction au rouleau (roll coating), racle (doctor blade), électropulvérisation, ou électrophorèse.

L'épaisseur de la couche de matériau polymère est inférieure à 10 µm, de préférence inférieure à 5 µm, et encore plus préférentiellement inférieure à 2 µm. Avantageusement, l'épaisseur de la couche de matériau polymère est comprise entre 0,5 et 1 µm.

Les couches d'anode, de cathode et d'électrolyte solide sont déposées parmi au moins l'une des techniques suivantes :
(i) dépôt physique par phase vapeur (PVD), et plus particulièrement par évaporation sous vide, par ablation laser, par faisceau d'ions, par pulvérisation cathodique ;
(ii) dépôt chimique par phase vapeur (CVD), et plus particulièrement assisté par plasma (PECVD), assisté par laser (LACVD), ou assisté par aérosol (AA-CVD) ;
(iii) électropulvérisation ;
(iv) électrophorèse ;
(v) aérosol déposition ;
(vi) sol-gel ;
(vii)trempage, plus particulièrement par trempage-retrait (dip-coating), trempage-tournette (spin-coating), ou par le procédé Langmuir-Blodgett.

De préférence, les couches d'anode, de cathode et d'électrolyte sont déposées par électropulvérisation, électrophorèse, à partir d'un aérosol ou par trempage, et sont de préférence, toutes déposées par électrophorèse.

Dans un mode de réalisation particulier, les couches de matériau d'anode et/ou de cathode comprennent en outre des matériaux conducteurs électroniques, et en particulier de graphite, et/ou des nanoparticules de matériaux conducteurs des ions lithium, du type de ceux utilisés pour réaliser les films d'électrolyte, ou des matériaux polymère réticulé comportant des groupements ioniques.

De préférence, les couches d'anode et/ou de cathode et/ou d'électrolyte sont réalisées par un dépôt de nanoparticules respectivement de matériau d'anode, de cathode ou d'électrolyte parmi l'une au moins des techniques suivantes : électropulvérisation, électrophorèse, aérosol déposition, trempage. Plus particulièrement, les couches de nanoparticules de matériau d'anode, de cathode et d'électrolyte sont toutes déposées par électrophorèse.

Selon l'invention, le traitement thermique est réalisé à une température comprise entre 50°C et 300°C, de préférence entre 100°C et 200°C et/ou en ce que la compression mécanique des couches à assembler est réalisée à une pression comprise entre 10 et 100 MPa, de préférence entre 20 et 50 MPa.

La couche de matériau d'anode a) est réalisée à partir d'un matériau choisi parmi :
(i) les oxynitrures d'étain (de formule typique SnOₓN_{y}) ;
(ii) le phosphate de fer lithié (de formule typique LiFePO₄) ;
(iii) les oxynitrures mixtes de silicium et étain (de formule typique SiₐSn_{b}O_{y}N_{z} avec a>0, b>0, a+b≤2, 0<y≤4, 0<z≤3) (appelés aussi SiTON), et en particulier le SiSn_{0.87}O_{1,2}N_{1,72} ; ainsi que les oxynitrures-carbures de formule typique SiₐSn_{b}C_{c}O_{y}N_{z} avec a>0, b>0, a+b≤2, 0<c<10, 0<y<24, 0<z<17; SiₐSn_{b}C_{c}O_{y}N_{z}Xₙ avec Xₙ au moins un des éléments parmi F, Cl, Br, I, S, Se, Te, P, As, Sb, Bi, Ge, Pb et a>0, b>0, a+b>0, a+b≤2, 0<c<10, 0<y<24 et 0<z<17; et SiₐSn_{b}O_{y}N_{z}Xₙ avec au moins un des éléments parmi F, Cl, Br, I, S, Se, Te, P, As, Sb, Bi, Ge, Pb et a>0, b>0, a+b≤2, 0<y≤4 et 0<z≤3;
(iv) les nitrures de type SiₓN_{y} (en particulier avec x=3 et y=4), SnₓN_{y} (en particulier avec x=3 et y=4), ZnₓN_{y} (en particulier avec x=3 et y=4), Li₃₋ₓMₓN (avec M = Co, Ni, Cu) ;
(v) les oxydes SnO₂, Li₄Ti₅O₁₂, SnB_{0,6}P_{0,4}O_{2,9} et TiO₂.

La couche de matériau de cathode b) est réalisée à partir d'un matériau de cathode choisi parmi :
(i) les oxydes LiMn₂O₄, LiCoO₂, LiNiO₂, LiMn_{1,5}Ni_{0,5}O₄, LiMn_{1,5}Ni_{0,5-x}XₓO₄ (où x est sélectionné parmi Al, Fe, Cr, Co, Rh, Nd, autres terres rares, et où 0 < x < 0,1), LiFeO₂, LiMn_{1/3}Ni_{1/3}CO_{1/3}O₄;
(ii) les phosphates LiFePO₄, LiMnPO₄, LiCoPO₄, LiNiPO₄, Li₃V₂(PO₄)₃ ; les phosphates de formule LiMM'PO₄, avec M et M' (M ≠ M') sélectionnés parmi Fe, Mn, Ni, Co, V ;
(iii) toutes les formes lithiées des chalcogénides suivants : V₂O₅, V₃O₈, TiS₂, les oxysulfures de titane (TiO_{y}S_{z}), les oxysulfures de tungstène (WO_{y}S_{z}), CuS, CuS₂.

La couche de matériau d'électrolyte c) est réalisée à partir de matériau d'électrolyte choisi parmi :
∘ les grenats de formule

   Li_{d} A¹ₓ A²_{y}(TO₄)_{z}

   où
   ▪ A¹ représente un cation de degré d'oxydation +II, de préférence Ca, Mg, Sr, Ba, Fe, Mn, Zn, Y, Gd ; et où
   ▪ A² représente un cation de degré d'oxydation +III, de préférence Al, Fe, Cr, Ga, Ti, La ; et où
   ▪ (TO₄) représente un anion dans lequel T est un atome de degré d'oxydation +IV, situé au centre d'un tétraèdre formé par les atomes d'oxygène, et dans lequel TO₄ représente avantageusement l'anion silicate ou zirconate, sachant que tout ou partie des éléments T d'un degré d'oxydation +IV peuvent être remplacés par des atomes d'un degré d'oxydation +III ou +V, tels que Al, Fe, As, V, Nb, In, Ta ;
   ▪ sachant que : d est compris entre 2 et 10, préférentiellement entre 3 et 9, et encore plus préférentiellement entre 4 et 8 ; x est de 3 mais peut être compris entre 2,6 et 3,4 (de préférence entre 2,8 et 3,2) ; y est de 2 mais peut être compris entre 1,7 et 2,3 (de préférence entre 1,9 et 2,1) ; et z est de 3 mais peut être compris entre 2.9 et 3.1;
∘ les grenats, de préférence choisi parmi : le Li₇La₃Zr₂O₁₂; le Li₆La₂BaTa₂O₁₂ ; le Li_{5,5}La₃Nb_{1,75}In_{0.25}O₁₂ ; le Li₅La₃M₂O₁₂ avec M = Nb ou Ta ou un mélange des deux composés ; le Li₇₋ₓBaₓLa₃₋ₓM₂O₁₂ avec 0≤x≤1 et M = Nb ou Ta ou un mélange des deux composés ; le Li₇₋ₓLa₃Zr₂₋ₓMₓO₁₂ avec 0≤x≤2 et M = Al, Ga ou Ta ou un mélange de deux ou trois de ces composés ;
∘ les phosphates lithiés, de préférence choisi parmi : le Li₃PO₄; le Li₃(Sc₂₋ₓMₓ)(PO₄)₃ avec M=AI ou Y et 0 ≤ x ≤ 1 ; le Li₁₊ₓMₓ(Sc)₂₋ₓ(PO₄)₃ avec M = Al, Y, Ga ou un mélange des trois composés et 0 ≤ x ≤ 0,8 ; le Li₁₊ₓMₓ(Ga_{1-y}Sc_{y})₂₋ₓ(PO₄)₃ avec 0 ≤ x ≤ 0,8 ; 0 ≤ y ≤ 1 et M= Al ou Y ou un mélange des deux composés ; le Li₁₊ₓMₓ(Ga)₂₋ₓ(PO₄)₃ avec M = Al, Y ou un mélange des deux composés et 0 ≤ x ≤ 0,8 ; ;le Li₁₊ₓAlₓTi₂₋ₓ(PO₄)₃ avec 0 ≤ x ≤ 1, ou le Li₁₊ₓAlₓGe₂₋ₓ(PO₄)₃ avec 0 ≤ x ≤ 1 ; ou le Li_{1+x+z}Mₓ(Ge_{1-y}Ti_{y})₂₋ₓSi_{z}P_{3-z}O₁₂ avec 0≤x≤0,8 et 0≤y≤1,0 & 0≤z≤0,6 et M= Al, Ga ou Y ou un mélange de deux ou trois de ces composés ; le Li_{3+y}(Sc₂₋ₓMₓ)Q_{y}P_{3-y}O₁₂, avec M = Al et/ou Y et Q = Si et/ou Se, 0 ≤ x ≤ 0,8 et 0 ≤ y ≤ 1 ; ou le Li_{1+x+y}MₓSc₂₋ₓQ_{y}P_{3-y}O₁₂, avec M = Al, Y, Ga ou un mélange des trois composés et Q = Si et/ou Se, 0 ≤ x ≤ 0,8 et 0 ≤ y ≤ 1 ; ou le Li_{1+x+y+z}Mₓ(Ga_{1-y}Sc_{y})₂₋ₓQ_{z}P_{3-z}O₁₂ avec 0 ≤ x ≤ 0,8 ; 0 ≤ y ≤ 1 ; 0 ≤ z ≤ 0,6 avec M = Al ou Y ou un mélange des deux composés et Q= Si et/ou Se ; ou Li₁₊ₓNₓM₂₋ₓP₃O₁₂, avec 0 ≤ x ≤ 1 et N= Cr et/ou V, M = Sc, Sn, Zr, Hf, Se ou Si, ou un mélange de ces composés ;
∘ les borates lithiés, de préférence choisi parmi : le Li₃(Sc₂₋ₓMₓ)(BO₃)₃ avec M=Al ou Y et 0 ≤ x ≤ 1 ; le Li₁₊ₓMₓ(Sc)₂₋ₓ(BO₃)₃ avec M = Al, Y, Ga ou un mélange des trois composés et 0 ≤ x ≤ 0,8 ; 0 ≤ y ≤ 1 ; le Li₁₊ₓMₓ(Ga_{1-y}Sc_{y})₂₋ₓ(BO₃)₃ avec 0 ≤ x ≤ 0,8 ; 0 ≤ y ≤ 1 et M= Al ou Y ; le Li₁₊ₓMₓ(Ga)₂₋ₓ(BO₃)₃ avec M = Al, Y ou un mélange des deux composés et 0 ≤ x ≤ 0,8 ; 0 ≤ y ≤ 1 ; le Li₃BO₃, le Li₃BO₃-Li₂SO₄, le Li₃BO₃-Li₂SiO₄, le Li₃BO₃-Li₂SiO₄-Li₂SO₄ ;
∘ les oxynitrures, de préférence choisis parmi Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les matériaux à base d'oxynitrures de lithium de phosphore ou de bore (appelés LiPON et LIBON) pouvant également contenir du silicium, du soufre, du zirconium, de l'aluminium, ou une combinaison d'aluminium, bore, soufre et/ou silicium, et du bore pour les de lithium de phosphore ;
∘ les oxydes lithiés, de préférence choisis parmi le Li₇La₃Zr₂O₁₂ ou le Li₅₊ₓLa₃(Zrₓ,A₂₋ₓ)O₁₂ avec A=Sc, Y, Al, Ga et 1,4 ≤ x ≤ 2 ou le Li_{0,35}La_{0,55}TiO₃ ;
∘ les silicates, de préférence choisis parmi Li₂Si₂O₅, Li₂SiO₃, Li₂Si₂O₆, LiAlSiO₄, Li₄SiO₄, LiAlSi₂O₆.

La couche de matériau d'électrolyte c) stable aux contacts des anodes fonctionnant à des potentiels très réducteurs est réalisée à partir de matériau d'électrolyte choisi parmi :
∘ les grenats de formule

   Li_{d} A¹ₓ A²_{y}(TO₄)_{z}

   où
   ▪ A¹ représente un cation de degré d'oxydation +II, de préférence Ca, Mg, Sr, Ba, Fe, Mn, Zn, Y, Gd ; et où
   ▪ A² représente un cation de degré d'oxydation +III, de préférence Al, Fe, Cr, Ga, Ti, La ; et où
   ▪ (TO₄) représente un anion dans lequel T est un atome de degré d'oxydation +IV, situé au centre d'un tétraèdre formé par les atomes d'oxygène, et dans lequel TO₄ représente avantageusement l'anion silicate ou zirconate, sachant que tout ou partie des éléments T d'un degré d'oxydation +IV peuvent être remplacés par des atomes d'un degré d'oxydation +III ou +V, tels que Al, Fe, As, V, Nb, In, Ta ;
   ▪ sachant que : d est compris entre 2 et 10, préférentiellement entre 3 et 9, et encore plus préférentiellement entre 4 et 8 ; x est de 3 mais peut être compris entre 2,6 et 3,4 (de préférence entre 2,8 et 3,2) ; y est de 2 mais peut être compris entre 1,7 et 2,3 (de préférence entre 1,9 et 2,1) et z est de 3 mais peut être compris entre 2.9 et 3.1 ;
∘ les grenats, de préférence choisi parmi : le Li₇La₃Zr₂O₁₂; le Li₆La₂BaTa₂O₁₂ ; le Li_{5,5}La₃Nb_{1,75}In_{0.25}O₁₂ ; le Li₅La₃M₂O₁₂ avec M = Nb ou Ta ou un mélange des deux composés ; le Li₇₋ₓBaₓLa₃₋ₓM₂O₁₂ avec 0≤x≤1 et M = Nb ou Ta ou un mélange des deux composés ; le Li₇₋ₓLa₃Zr₂₋ₓMₓO₁₂ avec 0≤x≤2 et M = Al, Ga ou Ta ou un mélange de deux ou trois de ces composés ;
∘ les phosphates lithiés, de préférence choisi parmi : le Li₃PO₄; le Li₃(Sc₂₋ₓMₓ)(PO₄)₃ avec M=Al ou Y et 0 ≤ x ≤ 1 ; le Li₁₊ₓMₓ(Sc)₂₋ₓ(PO₄)₃ avec M = Al, Y, Ga ou un mélange des trois composés et 0 ≤ x ≤ 0,8 ; le Li₁₊ₓMₓ(Ga_{1-y}Sc_{y})₂₋ₓ(PO₄)₃ avec 0 ≤ x ≤ 0,8 ; 0 ≤ y ≤ 1 et M= Al ou Y ou un mélange des deux composés ; le Li₁₊ₓMₓ(Ga)₂₋ₓ(PO₄)₃ avec M = Al, Y ou un mélange des deux composés et 0 ≤ x ≤ 0,8 ; le Li₁₊ₓAlₓGe₂₋ₓ(PO₄)₃ avec 0 ≤ x ≤ 1 ; le Li_{3+y}(Sc₂₋ₓMₓ)Q_{y}P_{3-y}O₁₂, avec M = Al et/ou Y et Q = Si et/ou Se, 0 ≤ x ≤ 0,8 et 0 ≤ y ≤ 1 ; ou le Li_{1+x+y}MₓSc₂₋ₓQ_{y}P_{3-y}O₁₂, avec M = Al, Y, Ga ou un mélange des trois composés et Q = Si et/ou Se, 0 ≤ x ≤ 0,8 et 0 ≤ y ≤ 1 ; ou le Li_{1+x+y+z}Mₓ(Ga_{1-y}Sc_{y})₂₋ₓQ_{z}P_{3-z}O₁₂ avec 0 ≤ x ≤ 0,8 ; 0 ≤ y ≤ 1 ; 0 ≤ z ≤ 0,6 avec M = Al ou Y ou un mélange des deux composés et Q= Si et/ou Se ; ou Li₁₊ₓNₓM₂₋ₓP₃O₁₂, avec 0 ≤ x ≤ 1 et N= Cr et/ou V, M = Sc, Sn, Zr, Hf, Se ou Si, ou un mélange de ces composés ;
∘ les borates lithiés, de préférence choisi parmi : le Li₃(Sc₂₋ₓMₓ)(BO₃)₃ avec M=Al ou Y et 0 ≤ x ≤ 1 ; le Li₁₋ₓMₓ(Sc)₂₋ₓ(BO₃)₃ avec M = Al, Y, Ga ou un mélange des trois composés et 0 ≤ x ≤ 0,8 ; 0 ≤ y ≤ 1 ; le Li₁₊ₓMₓ(Ga_{1-y}Sc_{y})₂₋ₓ(BO₃)₃ avec 0 ≤ x ≤ 0,8 ; 0 ≤ y ≤ 1 et M= Al ou Y ; le Li₁₊ₓMₓ(Ga)₂₋ₓ(BO₃)₃ avec M = Al, Y ou un mélange des deux composés et 0 ≤ x ≤ 0,8 ; 0 ≤ y ≤ 1 ; le Li₃BO₃, le Li₃BO₃-Li₂SO₄, le Li₃BO₃-Li₂SiO₄, le Li₃BO₃-Li₂SiO₄-Li₂SO₄ ;
∘ les oxynitrures, de préférence choisis parmi Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les matériaux à base d'oxynitrures de lithium de phosphore ou de bore (appelés LiPON et LIBON) pouvant également contenir du silicium, du soufre, du zirconium, de l'aluminium, ou une combinaison d'aluminium, bore, soufre et/ou silicium, et du bore pour les de lithium de phosphore ;
∘ les oxydes lithiés, de préférence choisis parmi le Li₇La₃Zr₂O₁₂ ou le Li₅₊ₓLa₃(Zrₓ,A₂₋ₓ)O₁₂ avec A= Sc, Y, Al, Ga et 1,4 ≤ x ≤ 2 ou le Li_{0,35}La_{0,55}TiO₃ ;
∘ les silicates, de préférence choisis parmi Li₂Si₂O₅, Li₂SiO₃, Li₂Si₂O₆, LiAlSiO₄, Li₄SiO₄, LiAlSi₂O₆.

Ces électrolytes peuvent être utilisés avec toutes les compositions chimiques d'anode.

En ajoutant une couche d'un matériau polymère réticulé comportant des groupements ioniques, sur la couche de matériau d'anode (respectivement de cathode) revêtue d'une couche de matériau d'électrolyte solide et/ou sur la couche de matériau de cathode (respectivement d'anode) revêtue ou non d'une couche de matériau d'électrolyte solide, il est possible d'associer cette couche de matériau d'électrolyte c) stable aux contacts des anodes avec d'autres formulations d'électrolytes solides qui elles ne seraient qu'exclusivement au contact des cathodes. Ces électrolytes stables uniquement au contact des cathodes sont les perovskites de formules Li₃ₓLa_{2/3-x}□_{1/3-x}TiO₃, La_{2/3-x}Srₓ□_{1/3-x}LiₓTiO₃ et La_{2/3}Liₓ□_{1/3-x}Ti₁₋ₓAlₓO₃ où □ représente une lacune présente au sein de la structure. Ainsi pour le Li₃ₓLa_{2/3-x}□_{1/3-x}TiO₃, la composition comprend une lacune de lanthane, la proportion de lanthane dans cette composition pouvant varier entre 2/3-x et 1/3-x, avec 0 < x < 0,20 et de préférence 0 < x < 0,16 ; pour le La_{2/3-x}Srₓ□_{1/3-x}LiₓTiO₃, la composition comprend une lacune de strontium, la proportion de strontium dans cette composition pouvant varier entre x et 1/3-x, avec 0 < x < 0,20 et de préférence 0 < x < 0,16 ; et pour le La_{2/3}Liₓ□_{1/3-x}Ti₁₋ₓAlₓO₃, la composition comprend une lacune de lithium, la proportion de lithium dans cette composition peut varier entre x et 1/3-x, avec 0 < x < 0,20 et de préférence 0 < x < 0,16. Dans un mode de réalisation particulier, le procédé comprend en outre une étape g) d'encapsulation de la batterie obtenue à l'étape f) par dépôt d'au moins une couche d'encapsulation de matériau céramique, vitreux ou vitrocéramique.

Avantageusement, on réalise des terminaisons anodiques et cathodiques par métallisation des sections découpées, de préférence par dépôt d'une couche d'étain éventuellement déposé sur une première sous couche de nickel et/ou de résine époxy chargé en particules métalliques.

De préférence, la taille des nanoparticules de matériaux d'électrolyte est inférieure à 100 nm, de préférence inférieure à 30 nm.

Les substrats conducteurs sont en aluminium, en cuivre, en acier inoxydable, en titane ou en nickel, de préférence en nickel, et éventuellement revêtus d'un métal noble choisi parmi les métaux suivants : l'or, le platine, le palladium, le vanadium, le cobalt, le nickel, le manganèse, de niobium, le tantale, le chrome, le molybdène, le titane, le palladium, le zirconium, le tungstène ou tout alliage comprenant au moins un de ces métaux.

Un autre objet de l'invention concerne une batterie susceptible d'être obtenue par le procédé selon l'invention.

Avantageusement, la capacité surfacique de la cathode est supérieure ou égale à la capacité surfacique de l'anode.

Dans un mode de réalisation préféré, l'empilement des couches de cathode et d'anode est décalé latéralement.

Avantageusement, la batterie comprend au moins une couche d'encapsulation, de préférence une couche en céramique, verre ou en vitrocéramique. Encore plus avantageusement, la batterie comprend une deuxième couche d'encapsulation déposée sur ladite première couche d'encapsulation, ladite deuxième couche d'encapsulation étant de préférence en silicone.

De préférence, ladite au moins une couche d'encapsulation revêt totalement quatre des six faces de ladite batterie et partiellement les deux faces restantes, situées sous les métallisations servant à la connectique de la batterie.

Dans un mode de réalisation particulier, la batterie comprend des terminaisons au niveau où les collecteurs de courant cathodique, respectivement anodique, sont apparents. Avantageusement, les connexions anodiques et les connexions cathodiques se trouvent sur les côtés opposés de l'empilement.

### Description détaillée de l'invention

### 1. Définitions

Dans le cadre de la présente invention, on entend par « dépôt électrophorétique » ou « dépôt par électrophorèse » une couche déposée par un procédé de dépôt de particules préalablement mises en suspension dans un milieu liquide, sur un substrat de préférence conducteur, le déplacement des particules vers la surface du substrat étant généré par l'application d'un champ électrique entre deux électrodes placées dans la suspension, l'une des électrodes constituant le substrat conducteur sur lequel le dépôt est effectué, l'autre électrode (« contre-électrode ») étant posée dans la phase liquide. Un dépôt dit « dense » de particules se forme sur le substrat, si le potentiel zêta de la suspension des particules présente une valeur appropriée, et/ou suite à un traitement spécifique de densification de nature thermique et/ou mécanique. Ce dépôt présente une structure particulière et reconnaissable par l'homme du métier qui le distingue des dépôts obtenus par toute autre technique.

Dans le cadre du présent document, la taille d'une particule est sa plus grande dimension. Ainsi, une « nanoparticule » est une particule dont au moins une des dimensions est inférieure à 100 nm. La « taille de particules » ou « taille moyenne de particules » d'une poudre ou d'un ensemble des particules est donnée en D₅₀.

On entend par batterie « tout solide » (appelée aussi ici batterie « entièrement solide »), une batterie ne comprenant pas de matériau en phase liquide.

On entend par « capacité surfacique » d'une électrode la quantité d'ion lithium susceptible d'être insérée dans une électrode (exprimée en mA.h/cm²).

Dans le cadre de la présente invention on peut utiliser des composés de type grenat (« garnet » en anglais), notamment en tant qu'électrolyte, dans lesquels la conductivité ionique est assurée par des ions de lithium. La composition chimique des grenats est variable en fonction de la substitution isomorphe des différents atomes qui constituent sa formule de base Li_{d} A¹ₓ A²_{y}(TO₄)_{z}. Dans cette formule Li représente un cation de lithium. La valeur d est comprise entre 2 et 10, préférentiellement entre 3 et 9, et encore plus préférentiellement entre 4 et 8. Dans cette formule A¹ représente un cation de degré d'oxydation +II, en site pseudo-cubique de coordinence 8. La valeur x est typiquement de 3, mais il peut y avoir un écart stœchiométrique. A¹ peut par exemple être Ca, Mg, Sr, Ba, Fe, Mn, Zn, Y, Gd. A² représente un cation de degré d'oxydation +III, en site octaédrique de coordinence 6. La valeur y est typiquement de 2, mais il peut y avoir un écart stœchiométrique. A² peut par exemple être Al, Fe, Cr, Ga, Ti, La. A¹ et A² peuvent représenter le même cation. TO₄ représente un anion dans lequel les quatre atomes d'oxygène forment un tétraèdre, le cation T étant au centre du tétraèdre ; T représente principalement un cation de degré d'oxydation +IV, et principalement le silicium. Dans ce dernier cas TO₄ représente l'anion silicate (SiO₄)⁴⁻ et on parle alors pour ces grenats de nésosilicates dont la structure peut être décrite par un réseau tridimensionnel formé de tétraèdres SiO₄ connectés par sommet à des octaèdres A²O₆. Les cavités ménagées ont la forme de cubes distordus A¹O₈ (dodécaèdres). Chaque tétraèdre partage ses sommets avec quatre octaèdres différents. Chaque octaèdre est lié par sommet à six tétraèdres différents et par arête à six dodécaèdres. Chaque dodécaèdre partage des arêtes avec quatre autres dodécaèdres, quatre octaèdres et deux tétraèdres. Seules deux de ses arêtes ne sont pas partagées. T peut être également le cation Zr⁴⁺. Tout ou partie des éléments T d'un degré d'oxydation +IV peut être remplacé par des atomes d'un degré d'oxydation +III ou +V, tel que : Al, Fe, As, V, Nb, In, Ta, Zr ; cela peut engendrer un ajustement de la quantité molaire d'oxygène dans la formule Li_{d} A¹ₓ A²_{y}(TO₄)_{z}. Dans cette formule les atomes A¹, A², T et O peuvent faire l'objet d'une substitution isomorphe. Cette substitution isomorphe peut être de différents types, et principalement de deux types : un nombre d'atomes identiques peut être remplacé par le même nombre d'atomes différents de même valence (isomorphismes dit de première espèce), un atome peut être remplacé par un autre atome de rayon ionique proche et d'une valence qui diffère d'une unité (isomorphisme dit de second espèce, par substitution dite aliovalente) ; dans ce deuxième cas la neutralité électrique est assurée soit par un remplacement correspondant dans le réseau cristallographique, soit par une lacune, soit encore par un ion (anion ou cation) interstitiel mobile ; cet ion interstitiel mobile peut être du lithium. Dans la formule indiquée ci-dessus le nombre z est normalement égal à 3 ou proche de 3. Une petite partie des atomes d'oxygène peut éventuellement être lié à un atome d'hydrogène (groupement OH au lieu de O). Une petite partie des groupes (TO₄) peut également être remplacé par des groupements OH ; dans ce cas il conviendrait d'écrire (TO₄)₃₋ₚ(OH)_{4b} au lieu de (TO₄)₃. L'oxygène peut être remplacé au moins partiellement par des anions bivalents ou trivalents (tels que N³⁻).

Les conducteurs ioniques à base de type grenat avec des ions de lithium mobiles sont décrits par exemple dans les documents WO 2005/085138, WO 2009/003695 et WO 2010/090301. Les ions lithium occupent des sites cristallographiques et peuvent aussi être en position interstitielle.

Dans le cadre de la présente invention les composés de type grenat sont, de préférence, choisis parmi :
∘ le Li₇La₃Zr₂O₁₂ ;
∘ le Li₆La₂BaTa₂O₁₂ ;
∘ le Li_{5,5}La₃Nb_{1,75}In_{0,25}O₁₂ ;
∘ le Li₅La₃M₂O₁₂ avec M = Nb ou Ta ou un mélange des deux composés ;
∘ le Li₇₋ₓBaₓLa₃₋ₓM₂O₁₂ avec 0≤x≤1 et M = Nb ou Ta ou un mélange des deux composés ;
∘ et le Li₇₋ₓLa₃Zr₂₋ₓMₓO₁₂ avec 0≤x≤2 et M = Al, Ga ou Ta ou un mélange de deux ou trois de ces composés.

### 2. Description détaillée

Pour répondre aux inconvénients précédemment cités, l'inventeur a mis au point un nouveau procédé de fabrication de batterie tout solide, ne contenant pas de solvants organiques afin qu'elles puissent être chauffées sans risque de combustion. Les objectifs sont atteints par la mise en oeuvre d'un procédé de fabrication d'une batterie en couche mince comprenant au moins une couche d'un matériau polymère réticulé comportant des groupements ioniques. Les batteries obtenues par le procédé selon l'invention sont de structure multicouches, en opposition aux structures planaires des batteries en couches minces conventionnelles, afin d'obtenir des batteries possédant une bonne densité d'énergie et de puissance. De plus, le procédé d'obtention de ces batteries permet de réaliser un assemblage des couches de la batterie à une température relativement basse, i.e. à une température inférieure à 300°C, et ce sans diminuer les capacités surfaciques des électrodes constitutives de la batterie résultante. La réalisation d'une batterie "tout solide" nécessite le recours à des matériaux stables dimensionnellement, afin de fiabiliser le comportement de la batterie, notamment en ce qui concerne la limitation des contraintes de déformation sur l'encapsulation, ou sur les électrodes.

Les couches d'anode, de cathode et d'électrolyte solide sont déposées parmi au moins l'une des techniques suivantes :
i) dépôt physique par phase vapeur (PVD), et plus particulièrement par évaporation sous vide, par ablation laser, par faisceau d'ions, par pulvérisation cathodique ;
ii) dépôt chimique par phase vapeur (CVD), et plus particulièrement assisté par plasma (PECVD), assisté par laser (LACVD), ou assisté par aérosol (AA-CVD) ;
iii) électropulvérisation ;
iv) électrophorèse ;
v) aérosol deposition ;
vi) sol-gel ;
vii) trempage, plus particulièrement par trempage-retrait (dip-coating), trempage-tournette (spin-coating), ou par le procédé Langmuir-Blodgett.

Selon l'invention, les couches d'anode, de cathode et d'électrolyte solide sont avantageusement déposées par électrophorèse. Le dépôt électrophorétique de particules se fait par l'application d'un champ électrique entre le substrat sur lequel est réalisé le dépôt et une contre-électrode, permettant de mettre en mouvement les particules chargées de la suspension colloïdale, et de les déposer sur le substrat. L'absence de liants et d'autres solvants déposés en surface avec les particules permet d'obtenir des dépôts très compacts. La compacité obtenue grâce au dépôt électrophorétique, limite voire d'évite les risques de craquelures ou d'apparition d'autres défauts dans le dépôt pendant les étapes de séchage. De plus la vitesse de dépôt peut être très élevée en fonction du champ électrique appliqué et de la mobilité électrophorétique des particules de la suspension.

Selon l'invention, le procédé de fabrication d'une batterie tout solide selon l'invention comprend une étape a) de dépôt d'une couche de matériau d'anode. Les matériaux choisis pour la couche de matériau d'anode sont de préférence choisis parmi les matériaux suivants :
(i) les oxynitrures d'étain (de formule typique SnOₓN_{y}) ;
(ii) le phosphate de fer lithié (de formule typique LiFePO₄) ;
(iii) les oxynitrures mixtes de silicium et étain (de formule typique SiₐSn_{b}O_{y}N_{z} avec a>0, b>0, a+b≤2, 0<y≤4, 0<z≤3) (appelés aussi SiTON), et en particulier le SiSn_{0,87}O_{1,2}N_{1,72} ; ainsi que les oxynitrures-carbures de formule typique SiₐSn_{b}C_{c}O_{y}N_{z} avec a>0, b>0, a+b≤2, 0<c-10, 0<y<24, 0<z<17; SiₐSn_{b}C_{c}O_{y}N_{z}Xₙ avec au moins un des éléments parmi F, Cl, Br, I, S, Se, Te, P, As, Sb, Bi, Ge, Pb et a>0, b>0, a+b>0, a+b≤2, 0<c<10, 0<y<24 et 0<z<17; et SiₐSn_{b}O_{y}N_{z}Xₙ avec au moins un des éléments parmi F, Cl, Br, I, S, Se, Te, P, As, Sb, Bi, Ge, Pb et a>0, b>0, a+b≤2, 0<y≤4 et 0<z≤3.
(iv) les nitrures de type SiₓN_{y} (en particulier avec x=3 et y=4), SnₓN_{y} (en particulier avec x=3 et y=4), ZnₓN_{y} (en particulier avec x=3 et y=4), Li₃₋ₓMₓN (avec M = Co, Ni, Cu) ;
(v) les oxydes SnO₂, Li₄Ti₅O₁₂, SnB_{0,6}P_{0,4}O_{2,9} et TiO₂.

Le Li₄Ti₅O₁₂ pour la réalisation d'une couche d'anode est particulièrement préférée. De plus, le Li₄Ti₅O₁₂ est un matériau à insertion du lithium insérant de manière réversible les ions lithium sans induire de déformation du matériau hôte.

Selon l'invention, le procédé de fabrication d'une batterie tout solide comprend une étape b) de dépôt d'une couche de matériaux de cathode. La couche de matériaux de cathode est de préférence réalisée par électrophorèse. Les matériaux choisis pour la couche de matériau de cathode sont de préférence choisis parmi les matériaux suivants :
(i) les oxydes LiMn₂O₄, LiCoO₂, LiNiO₂, LiMn_{1,5}Ni_{0,5}O₄, LiMn_{1,5}Ni_{0,5-x}XₓO₄ (où X est sélectionné parmi Al, Fe, Cr, Co, Rh, Nd, autres terres rares, et où 0 < x < 0,1), LiFeO₂, LiMn_{1/3}Ni_{1/3}CO_{1/3}O₄;
(ii) les phosphates LiFePO₄, LiMnPO₄, LiCoPO₄, LiNiPO₄, Li₃V₂(PO₄)₃ ;
(iii) toutes les formes lithiées des chalcogénides suivants : V₂O₅, V₃O₈, TiS₂, les oxysulfures de titane (TiO_{y}S_{z}), les oxysulfures de tungstène (WO_{y}S_{z}), CuS, CuS₂.

L'électrode de cathode, constituée d'un film mince de LiMn₂O₄ déposé sur un substrat métallique, de préférence en nickel est avantageusement réalisée sans avoir recours à des techniques du vide, ni salles sèches, qui sont des équipements très couteux à mettre en œuvre. En effet, le LiMn₂O₄, comme le LiMn_{1,5}Ni_{0,5}O₄ ne sont pas sensibles spontanément à l'air, il est cependant recommandé d'éviter les expositions prolongées. L'impact des expositions des matériaux de cathode à l'air pendant la fabrication des électrodes reste négligeable aux regards des durées de mise en œuvre relativement courtes.

Pour la réalisation de l'anode ou de la cathode, on peut ajouter aux matériaux cités précédemment des nanoparticules de matériaux conducteurs électroniques, et en particulier de graphite, et/ou des nanoparticules de matériaux conducteurs ioniques, du type de ceux utilisés pour réaliser les films d'électrolyte (décrits ci-après), ou des matériaux polymère réticulé comportant des groupements ioniques.

Avantageusement, les dépôts de la couche de matériau d'anode et de cathode sont réalisés par un dépôt électrophorétique de nanoparticules de matériau d'anode et de cathode respectivement.

Avantageusement, les dépôts de la couche de nanoparticules de matériau d'anode et de cathode sont réalisés directement sur leur substrat métallique. Pour des faibles tailles de nanoparticules, i.e. inférieurs à 100 nm, le dépôt des couches d'anode, de cathode et d'électrolyte sont réalisées par électropulvérisation, électrophorèse, à partir d'un aérosol ou par trempage. Avantageusement, les couches d'anode, de cathode et d'électrolyte sont toutes déposées par électrophorèse. Ce mode de réalisation particulier du procédé selon l'invention permet d'obtenir une couche dense et compacte de nanoparticules, notamment par auto-densification (appelé « self-sintering ») de la couche de nanoparticules lors de l'étape de dépôt électrophorétique, de séchage et/ou de traitement thermique à basse température. Par ailleurs, le dépôt électrophorétique de la couche de nanoparticules de matériau d'anode ou de cathode étant compact, le risque de fissuration de la couche après séchage est réduit, et ce, contrairement aux couches de nanoparticules réalisées à partir d'encres ou de fluides, ayant de faibles extraits secs et pour lesquels les dépôts contiennent du solvant en grande quantité, qui après séchage donne lieu à l'apparition de fissures dans le dépôt, nuisible pour le fonctionnement d'une batterie.

Selon l'invention, le dépôt de la couche de matériau d'anode ou de cathode est réalisé directement sur son substrat conducteur, de préférence un substrat conducteur métallique choisi parmi les matériaux suivants : nickel, aluminium, acier inoxydable, titane ou cuivre. Dans un mode de réalisation préféré, le dépôt de la couche de matériau d'anode ou de cathode est réalisé sur un substrat en nickel. L'épaisseur du substrat est inférieur à 10 µm, de préférence inférieure à 5 µm.

Les substrats conducteurs peuvent être réalisés sous forme de feuilles, éventuellement des feuilles comprenant les motifs des électrodes pré-découpés ou sous forme de bandes. Afin d'améliorer la qualité des contacts électriques avec les électrodes, les substrats peuvent avantageusement être revêtus d'un métal ou d'un alliage de métaux, de préférence choisi parmi l'or, le chrome, l'inox, le palladium, le molybdène, le titane, le tantale, ou l'argent.

Selon l'invention, le dépôt d'une couche de nanoparticules de matériau d'anode ou de cathode directement sur son substrat conducteur, par exemple par électrophorèse, permet d'obtenir une couche dense de structure nanocristalline. Cependant, la formation de joints de grains est possible, conduisant à formation d'une couche de structure particulière, entre celle d'un matériau amorphe et cristallisé, ce qui peut dans certains cas limiter la cinétique de diffusion des ions lithiums dans l'épaisseur de l'électrode. Ainsi, la puissance de l'électrode de la batterie et le cycle de vie peuvent être affectés. Avantageusement, afin d'améliorer les performances de la batterie, un traitement thermique de recristallisation peut être réalisé pour améliorer la cristallinité, et éventuellement la consolidation de l'électrode afin de renforcer la puissance des électrodes (anode et/ou cathode).

Le traitement thermique de recristallisation de la couche d'anode et/ou de cathode est réalisé à une température comprise entre 300°C et 1000°C, de préférence entre 400°C et 800°C, et encore plus préférentiellement entre 500°C et 700°C. Le traitement thermique doit être réalisé après l'étape a) et/ou b) de dépôt de la couche d'anode et/ou de cathode, mais avant l'étape c) de dépôt de la couche d'électrolyte.

Selon l'invention, le procédé de fabrication d'une batterie comprend une étape c) de dépôt d'une couche de matériau d'électrolyte. Le dépôt de la couche de matériau d'électrolyte est réalisé sur la couche de matériau d'anode, et/ou sur la couche de matériau de cathode.

Le dépôt d'une couche d'électrolyte solide sur la couche d'anode et/ou de cathode permet de protéger la cellule électrochimique de court-circuit interne. Il permet également de réaliser une batterie entièrement solide comportant une durée de vie élevée, et simple de fabrication. Le dépôt de la couche de matériau d'électrolyte est de préférence réalisé par électrophorèse.

Plus particulièrement, les matériaux choisis en tant que matériaux d'électrolyte sont de préférence choisis parmi les matériaux suivants :
- sur la couche de matériau obtenue à l'étape a) et/ou b) :
   o les grenats de formule

      Li_{d} A¹ₓ A²_{y}(TO₄)_{z}

      où
      ▪ A¹ représente un cation de degré d'oxydation +II, de préférence Ca, Mg, Sr, Ba, Fe, Mn, Zn, Y, Gd ; et où
      ▪ A² représente un cation de degré d'oxydation +III, de préférence Al, Fe, Cr, Ga, Ti, La ; et où
      ▪ (TO₄) représente un anion dans lequel T est un atome de degré d'oxydation +IV, situé au centre d'un tétraèdre formé par les atomes d'oxygène, et dans lequel TO₄ représente avantageusement l'anion silicate ou zirconate, sachant que tout ou partie des éléments T d'un degré d'oxydation +IV peuvent être remplacés par des atomes d'un degré d'oxydation +III ou +V, tels que Al, Fe, As, V, Nb, In, Ta ;
      ▪ sachant que : d est compris entre 2 et 10, préférentiellement entre 3 et 9, et encore plus préférentiellement entre 4 et 8 ; x est de 3 mais peut être compris entre 2,6 et 3,4 (de préférence entre 2,8 et 3,2) ; y est de 2 mais peut être compris entre 1,7 et 2,3 (de préférence entre 1,9 et 2,1) et z est de 3 mais peut être compris entre 2.9 et 3.1;
   ∘ les grenats, de préférence choisi parmi : le Li₇La₃Zr₂O₁₂; le Li₆La₂BaTa₂O₁₂ ; le Li_{5,5}La₃Nb_{1,75}In_{0.25}O₁₂ ; le Li₅La₃M₂O₁₂ avec M = Nb ou Ta ou un mélange des deux composés ; le Li₇₋ₓBaₓLa₃₋ₓM₂O₁₂ avec 0≤x≤1 et M = Nb ou Ta ou un mélange des deux composés ; le Li₇₋ₓLa₃Zr₂₋ₓMₓO₁₂ avec 0≤x≤2 et M = Al, Ga ou Ta ou un mélange de deux ou trois de ces composés ;
   ∘ les phosphates lithiés, de préférence choisi parmi : le Li₃PO₄; le Li₃(Sc₂₋ₓMₓ)(PO₄)₃ avec M=Al ou Y et 0 ≤ x ≤ 1 ; le Li₁₊ₓMₓ(Sc)₂₋ₓ(PO₄)₃ avec M = Al, Y, Ga ou un mélange des trois composés et 0 ≤ x ≤ 0,8 ; le Li₁₊ₓMₓ(Ga_{1-y}Sc_{y})₂₋ₓ(PO₄)₃ avec 0 ≤ x ≤ 0,8 ; 0 ≤ y ≤ 1 et M= Al ou Y ou un mélange des deux composés; le Li₁₊ₓMₓ(Ga)₂₋ₓ(PO₄)₃ avec M = Al, Y ou un mélange des deux composés et 0 ≤ x ≤ 0,8 ; le Li₁₊ₓAlₓTi₂₋ₓ(PO₄)₃ avec 0 ≤ x ≤ 1, ou le Li₁₊ₓAlₓGe₂₋ₓ(PO₄)₃ avec 0 ≤ x ≤ 1 ; ou le Li_{1+x+z}Mₓ(Ge_{1-y}Ti_{y})₂₋ₓSi_{z}P_{3-z}O₁₂ avec 0≤x≤0,8 et 0≤y≤1,0 & 0≤z≤0,6 et M= Al, Ga ou Y ou un mélange de deux ou trois de ces composés ; le Li_{3+y}(Sc₂₋ₓMₓ)Q_{y}P_{3-y}O₁₂, avec M = Al et/ou Y et Q = Si et/ou Se, 0 ≤ x ≤ 0,8 et 0 ≤ y ≤ 1 ; ou le Li_{1+x+y}MₓSc₂₋ₓQ_{y}P_{3-y}O₁₂, avec M = Al, Y, Ga ou un mélange des trois composés et Q = Si et/ou Se, 0 ≤ x ≤ 0,8 et 0 ≤ y ≤ 1 ; ou le Li_{1+x+y+z}Mₓ(Ga_{1-y}Sc_{y})₂₋ₓQ_{z}P_{3-z}O₁₂ avec 0 ≤ x ≤ 0,8 ; 0 ≤ y ≤ 1 ; 0 ≤ z ≤ 0,6 avec M = Al ou Y ou un mélange des deux composés et Q= Si et/ou Se ; ou Li₁₊ₓNₓM₂₋ₓP₃O₁₂, avec 0 ≤ x ≤ 1 et N= Cr et/ou V, M = Sc, Sn, Zr, Hf, Se ou Si, ou un mélange de ces composés ;
   ∘ les borates lithiés, de préférence choisi parmi : le Li₃(Sc₂₋ₓMₓ)(BO₃)₃ avec M=AI ou Y et 0 ≤ x ≤ 1 ; le Li₁₊ₓMₓ(Sc)₂₋ₓ(BO₃)₃ avec M = Al, Y, Ga ou un mélange des trois composés et 0 ≤ x ≤ 0,8 ; 0 ≤ y ≤ 1 ; le Li₁₊ₓMₓ(Ga_{1-y}Sc_{y})₂₋ₓ(BO₃)₃ avec 0 ≤ x ≤ 0,8 ; 0 ≤ y ≤ 1 et M= Al ou Y ; le Li₁₊ₓMₓ(Ga)₂₋ₓ(BO₃)₃ avec M = Al, Y ou un mélange des deux composés et 0 ≤ x ≤ 0,8 ; 0 ≤ y ≤ 1 ; le Li₃BO₃, le Li₃BO₃-Li₂SO₄, le Li₃BO₃-Li₂SiO₄, le Li₃BO₃-Li₂SiO₄-Li₂SO₄ ;
   ∘ les oxynitrures, de préférence choisis parmi Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les matériaux à base d'oxynitrures de lithium de phosphore ou de bore (appelés LiPON et LIBON) pouvant également contenir du silicium, du soufre, du zirconium, de l'aluminium, ou une combinaison d'aluminium, bore, soufre et/ou silicium, et du bore pour les de lithium de phosphore ;
   ∘ les oxydes lithiés, de préférence choisis parmi le Li₇La₃Zr₂O₁₂ ou le Li₅₊ₓLa₃(Zrₓ,A₂₋ₓ)O₁₂ avec A=Sc, Y, Al, Ga et 1,4 ≤ x ≤ 2 ou le Li_{0,35}La_{0,55}TiO₃ ;
   ∘ les silicates, de préférence choisis parmi Li₂Si₂O₅, Li₂SiO₃, Li₂Si₂O₆, LiAlSiO₄, Li₄SiO₄, LiAlSi₂O₆.

De préférence, lorsqu'on dépose une couche de matériau d'électrolyte uniquement sur la couche obtenue à l'étape b), on dépose une couche de matériau d'électrolyte choisi parmi :
∘ le Li₃(Sc₂₋ₓMₓ)(PO₄)₃ avec M=Al ou Y et 0 ≤ x ≤1 ; ou
∘ le Li₁₊ₓMₓ(Sc)₂₋ₓ(PO₄)₃ avec M = Al, Y, Ga ou un mélange de deux ou trois des composés et 0 ≤ x ≤ 0,8 ; 0 ≤ y ≤ 1,0 ; ou
∘ le Li₁₊ₓMₓ(Ga)₂₋ₓ(PO₄)₃ avec M = Al, Y ou un mélange des deux composés M et 0 ≤ x ≤ 0,8; 0 ≤ y≤ 1,0 ; ou
∘ le Li₁₊ₓMₓ(Ga_{1-y}Sc_{y})₂₋ₓ(PO₄)₃ avec 0 ≤ x ≤ 0,8 ; 0 ≤ y ≤ 1,0 et M= Al ou Y, ou un mélange des deux composés ; ou
∘ le Li₁₊ₓAlₓTi₂₋ₓ(PO₄)₃ avec 0 ≤ x ≤ 1, ou
∘ le Li₁₊ₓAlₓGe₂₋ₓ(PO₄)₃ avec 0 ≤ x ≤ 1 ; ou
∘ le Li_{1+x+z}Mₓ(Ge_{1-y}Ti_{y})₂₋ₓSi_{z}P_{3-z}O₁₂ avec 0≤x≤0,8 et 0≤y≤1,0 & 0≤z≤0,6 et M= Al, Ga ou Y ou un mélange de deux ou trois de ces composé ;ou
∘ Les oxydes lithiés choisis parmi les Li₇La₃Zr₂O₁₂ ou le Li₅₊ₓLa₃(Zrₓ,A₂₋ₓ)O₁₂ avec A=Sc, Y, Al, Ga et 1,4 ≤ x ≤ 2, Li_{0,35}La_{0,55}TiO₃ ou Li_{0,5}La_{0,5}TiO₃ ;
∘ les borates lithiés, de préférence choisi parmi : le Li₃(Sc₂₋ₓMₓ)(BO₃)₃ avec M=Al ou Y et 0 ≤ x ≤ 1 ; le Li₁₊ₓMₓ(Sc)₂₋ₓ(BO₃)₃ avec M = Al, Y, Ga ou un mélange des trois composés et 0 ≤ x ≤ 0,8 ; 0 ≤ y ≤ 1 ; le Li₁₊ₓMₓ(Ga_{1-y}Sc_{y})₂₋ₓ(BO₃)₃ avec 0 ≤ x ≤ 0,8 ; 0 ≤ y ≤ 1 et M= Al ou Y ; le Li₁₊ₓMₓ(Ga)₂₋ₓ(BO₃)₃ avec M = Al, Y ou un mélange des deux composés et 0 ≤ x ≤ 0,8 ; 0 ≤ y ≤ 1 ; le Li₃BO₃, le Li₃BO₃-Li₂SO₄, le Li₃BO₃-Li₂SiO₄, le Li₃BO₃-Li₂SiO₄-Li₂SO₄ ;
∘ les oxynitrures, de préférence choisis parmi Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les matériaux à base d'oxynitrures de lithium de phosphore ou de bore (appelés LiPON et LIBON) pouvant également contenir du silicium, du soufre, du zirconium, de l'aluminium, ou une combinaison d'aluminium, bore, soufre et/ou silicium, et du bore pour les de lithium de phosphore ;
∘ les silicates, de préférence choisis parmi Li₂Si₂O₅, Li₂SiO₃, Li₂Si₂O₆, LiAlSiO₄, Li₄SiO₄, LiAlSi₂O₆.

Avantageusement, la couche d'électrolyte solide est réalisée par dépôt électrophorétique de nanoparticules de matériau d'électrolyte, isolantes électriquement. Les couches obtenues sont totalement couvrants, sans défauts localisés. Les densités de courant de dépôt se concentrant sur les zones les moins isolantes, notamment localisé où un défaut est éventuellement présent.
L'absence de défauts dans la couche d'électrolyte, évite l'apparition de court-circuit rampants, d'autodécharges excessives, voire de défaillance de la cellule de la batterie.

La performance des batteries obtenues par le procédé selon l'invention est en partie dû à la structure cristalline du ou des matériaux de l'électrolyte. Pour obtenir une bonne performance de la batterie, il est avantageux d'obtenir un électrolyte en verre amorphe, ou de structures nanocristallines. Ainsi, pour éviter la croissance de la taille des grains des matériaux d'électrolyte après leur dépôt, et pour éviter de créer des réactions aux interfaces, l'assemblage de la batterie ne doit pas être réalisé à une température élevée, i.e. à une température ne dépassant pas 300°C.

Selon l'invention, on réalise après le dépôt de la couche de matériau d'électrolyte une couche d'un matériau polymère réticulé comportant des groupements ioniques :
∘ soit sur la couche de matériau d'anode revêtue d'une couche de matériau d'électrolyte solide et/ou sur la couche de matériau de cathode revêtue ou non d'une couche de matériau d'électrolyte solide ;
o soit sur la couche de matériau de cathode revêtue d'une couche de matériau d'électrolyte solide et/ou sur la couche de matériau d'anode revêtue ou non d'une couche de matériau d'électrolyte solide.

De préférence le matériau polymère réticulé est choisi parmi tout type de polymère contenant les groupements cationiques décrit ci-après. Plus particulièrement le matériau polymère réticulé est choisi parmi les polyméthacrylates de méthyle, les polyimides, les polysiloxanes ou les polyamines, contenant les groupements cationiques décrit ci-après. De préférence, les groupements ioniques du matériau polymère sont choisis parmi les cations suivants : l'imidazolium, le pyrazolium, le tétrazolium le pyridinium, le pyrrolidinium, tel que le n-propyl-n-methylpyrrolidinium (appelé aussi PYR₁₃) ou le n-butyl-n-methylpyrrolidinium (appelé aussi PYR₁₄), l'ammonium, le phosphonium ou le sulfonium ; et/ou parmi les anions suivants : le bis(trifluoromethane)sulfonimide, le bis(fluorosulfonl)imide, ou le n-(nonafluorobutanesulfonyle)-n-(trifluoromethanesulfonyle)-imide (de formule brute C₅F₁₂NO₄S₂, appelé aussi IM₁₄⁻). L'utilisation de tels anions permet de conserver de bonnes propriétés de résistance à l'exposition à l'air et à l'humidité, ce qui simplifie la mise en œuvre industrielle et garantit de meilleures performances en termes de durée de vie de la batterie. De plus, la couche de matériau de polymère réticulé comportant des groupements ioniques permettent de garantir la sécurité et la durée de vie de la batterie en la protégeant des risques de court-circuit et d'inflammation de solvant. En effet, ces matériaux polymères sont totalement solides et ne comprennent aucun électrolyte liquide, ou dissous dans un solvant. De plus, ces matériaux polymères réticulés résistent aux fortes températures, et ce sans risque d'évaporation ni d'inflammation d'un solvant organique.

Dans un mode de réalisation du procédé selon l'invention, on dépose directement le matériau polymère réticulé comportant des groupements ioniques par trempage-retrait (dip-coating), par trempage-tournette (spin-coating), enduction au rouleau (roll coating), racle (doctor blade), électropulvérisation, ou électrophorèse. Pour cela, on dissout dans un premier temps le matériau polymère dans un solvant approprié, on dépose le matériau polymère dissous sur la ou les couche(s) d'anode, de cathode et/ou d'électrolyte puis on sèche la couche de matériau polymère afin d'éliminer le solvant.

Avantageusement, le dépôt du matériau polymère réticulé est réalisé par électrophorèse afin de limiter les défauts dans la couche qui pourraient engendrer des courts-circuits sur la batterie finale. Le dépôt par électrophorèse permet d'obtenir une couche dense et compacte. Par ailleurs, le dépôt électrophorétique permet de réduire le risque de fissuration de la couche après séchage, et ce, contrairement aux couches réalisées à partir d'encres ou de fluides, ayant de faibles extraits secs et pour lesquels les dépôts contiennent du solvant en grande quantité, qui après séchage donne lieu à l'apparition de fissures dans le dépôt, nuisible pour le fonctionnement d'une batterie.

Dans un autre mode de réalisation du procédé selon l'invention, on dépose un monomère et/ou un oligomère et/ou un pré-polymère comprenant un ou plusieurs groupements polymérisables. De préférence, on dépose un pré-polymère comprenant un ou plusieurs groupements réactifs permettant le greffage des groupements ioniques. La polymérisation est réalisée par voie thermique et/ou photochimique directement sur la ou les couche(s) d'anode, de cathode ou d'électrolyte. Typiquement, la polymérisation est réalisée en présence d'un amorceur thermique, par exemple choisi parmi le peroxyde de benzoyle, le peroxyde d'acétyle ou encore l'azoisobutyronitrile, et/ou un amorceur photochimique, par exemple choisi parmi la benzoïne, une acétophénone, telle que la 2,2-diméthoxy-2-phénylacétophénone ou encore la 2,2-diéthoxyacétophénone.

Le dépôt d'un matériau polymère réticulé comportant des groupements ioniques permet d'augmenter considérablement la conductivité ionique de l'électrolyte. De plus, ces matériaux sont difficilement inflammables, résistants à haute température, et ont une pression de vapeur négligeable. La couche de matériau de polymère réticulé comportant des groupements ioniques permet alors la fabrication d'une batterie en couches minces de structure tridimensionnelle sans faire recours à un traitement thermique et/ou une compression mécanique sévère lors de l'étape d'assemblage de ladite batterie.

En effet, la réalisation d'au moins une couche de matériau polymère réticulé comportant des groupements ioniques permet d'effectuer l'assemblage des électrodes à basse température, i.e. une température ne dépassant pas 300°C, de préférence 200°C et encore plus préférentiellement 150°C.Avantageusement, un liquide ionique, du PYR 13, du PYR 14 et/ou un sel de lithium peuvent être dissous dans ces polymères réticulés comportant des groupements ioniques. L'ajout d'un liquide ionique, de PYR 13, de PYR 14 et/ou un sel de lithium est bénéfique pour les performances électrochimiques, cet ajout permet d'améliorer la conduction mais permet également de réduire la rigidité du film polymérique qui sans cet ajout reste très cassant.

Selon un mode particulier de réalisation du procédé de l'invention, les électrodes (anode et cathode) sont « poinçonnées » selon un motif de découpe afin de réaliser des découpes aux dimensions de la batterie à réaliser. Le poinçonnage des électrodes peut être réalisé après l'étape c) de dépôt de la couche d'électrolyte, ou après l'étape d) de dépôt de la couche de matériau de polymère réticulé comportant des groupements ioniques. Ces motifs comprennent trois découpes qui se jouxtent (par exemple en forme de U) et qui définissent la dimension de la batterie. Une deuxième fente peut être réalisée sur le côté non découpé afin de pouvoir assurer le passage des produits nécessaires à l'encapsulation du composant. Les électrodes anodiques et cathodiques sont ensuite empilées de manière alternée afin de constituer un empilement de plusieurs cellules élémentaires. Les motifs de découpes des anodes et cathodes sont placés en configuration « tête bêche ».

Dans un autre mode de réalisation particulier du procédé selon l'invention, les électrodes sont découpées avant l'étape c) de dépôt de la ou les couche(s) d'électrolyte, permettant le recouvrement des bords d'électrodes par un film d'électrolyte, protégeant ainsi le contact des électrodes avec l'atmosphère, et permettant d'améliorer la durée de vie calendaire de la batterie. Dans un mode de réalisation alternatif, les découpes sont réalisées sur les substrats avant les étapes a) et b) de dépôt de la couche d'anode et de cathode, permettant un recouvrement des bords d'électrodes par un film d'électrolyte. Ce mode de réalisation particulier présente l'avantage de recouvrir les bords d'électrodes avant le dépôt de la couche de matériau d'électrolyte, ce qui permet par la suite de réaliser aisément un film d'encapsulation autour des électrodes, surtout lorsque la couche d'électrolyte est composée de matériaux stables à l'humidité. Le recouvrement des bords latéraux des électrodes permet également de réduire les risques de court-circuit dans la cellule.

Enfin, une étape essentielle du procédé selon l'invention comprend un traitement thermique et/ou une compression mécanique de l'empilement obtenu précédemment pour obtenir une batterie en couches minces entièrement solide. Le traitement thermique est réalisé à une température comprise entre 50 et 300°C, de préférence 100 et 200°C, Avantageusement, la température du traitement thermique ne dépasse pas 200°C. Avantageusement, la compression mécanique des couches à assembler est réalisée à une pression comprise entre 10 et 100 MPa, de préférence entre 20 et 50 MPa.

Dans un mode de réalisation particulier, il est avantageux, après l'étape d'empilement et avant l'ajout des terminaisons, d'encapsuler l'empilement en déposant une couche mince d'encapsulation pour assurer la protection de la cellule de la batterie vis-à-vis de l'atmosphère. La couche d'encapsulation doit être stable chimiquement, résister à une température élevée et être imperméable à l'atmosphère pour jouer sa fonction de couche barrière. Préférentiellement, la couche mince d'encapsulation est constituée d'une couche polymérique, de céramique, en verre ou en vitrocéramique, pouvant être par exemple sous forme d'oxyde, de nitrure, de phosphates, d'oxynitrure, ou de siloxane. Encore plus préférentiellement, cette couche d'encapsulation est revêtue d'une résine époxy ou de silicone.

La couche d'encapsulation peut être avantageusement déposée par dépôt chimique en phase vapeur (CVD), ce qui permet d'avoir un recouvrement de l'ensemble des surfaces de l'empilement accessible. Ainsi, l'encapsulation peut ainsi réalisée directement sur les empilements, le revêtement pouvant pénétrer dans l'ensemble des cavités disponibles. Avantageusement, une seconde couche d'encapsulation peut être déposée sur la première couche d'encapsulation pour augmenter la protection des cellules batteries de leur environnement externe. Typiquement, le dépôt de cette seconde couche peut être réalisé par une imprégnation de silicone. Le choix d'un tel matériau vient du fait qu'il résiste à des températures élevées et la batterie peut ainsi être assemblée aisément par soudure sur des cartes électroniques sans apparition de transitions vitreuses.

Avantageusement, l'encapsulation de la batterie est réalisée sur quatre des six faces de l'empilement. Les couches d'encapsulation entourent la périphérie de l'empilement, le reste de la protection à l'atmosphère étant assuré par les couches obtenues par les terminaisons.
De manière préférentielle les connections cathodiques et anodiques sont décalées latéralement, ce qui permet à la couche d'encapsulation de fonctionner comme diélectrique pour éviter la présence de court-circuit sur ces extrémités.

Une fois l'empilement réalisé, et après l'étape d'encapsulation de l'empilement si cette dernière est réalisée, des terminaisons (contacts électriques) sont ajoutées au niveau où les collecteurs de courant cathodiques, respectivement anodiques sont apparents (non revêtus d'électrolyte isolant). Ces zones de contact peuvent être sur les côtés opposés de l'empilement pour collecter le courant mais également ou sur des côtés adjacents.

Pour réaliser les terminaisons, l'empilement, éventuellement enrobé, est découpé suivant des plans de coupe permettant d'obtenir des composants de batterie unitaires, avec la mise à nue sur chacun des plans de coupe des connexions (+) et (-) de la batterie. Les connexions peuvent ensuite être métallisées à l'aide de techniques de dépôt plasma connu de l'homme du métier et / ou par immersion dans une résine époxy conductrice (chargée à l'argent) et / ou un bain d'étain en fusion. Les terminaisons permettent de reprendre les connections électriques alternativement positives et négatives sur chacune des extrémités. Ces terminaisons permettent de réaliser les connections électriques en parallèle entre les différents éléments de batterie. Pour cela, seule les connections (+) sortent sur une extrémité, et les (-) sont disponibles sur les autres extrémités.

Cette batterie étant entièrement solide, et utilisant un matériau à insertion du lithium comme matériau d'anode, les risques de formation de dendrites de lithium métallique durant les étapes de recharge sont nuls et la capacité d'insertion de l'anode en lithium devient limitée.
Aussi, afin de garantir de bonnes performances en cyclage de la batterie selon l'invention l'architecture de batterie pour laquelle la capacité surfacique des cathodes est supérieure ou égale à la capacité surfacique des anodes est préférée.

Les couches constitutives de la batterie étant entièrement solide, le risque de formation de dendrites de lithium n'existe plus lorsque l'anode est totalement chargée. Ainsi, une telle architecture de batterie évite la création de surcharge de cellules de batterie.

Aussi, la réalisation d'une telle batterie avec des capacités surfaciques de cathodes supérieures ou égales à celles des anodes permet d'accroitre les performances en termes de durée de vie, exprimée en nombre de cycles. En effet, les électrodes étant denses et entièrement solides, le risque de perte de contact électrique entre les particules est nul. De plus, il n'existe plus de risque de dépôt de lithium métallique dans l'électrolyte ou dans les porosités des électrodes, et enfin le risque de détérioration de la structure cristalline du matériau de cathode est inexistant.

### Exemple

Une suspension du matériau d'anode a été obtenue par broyage/dispersion de Li₄Ti₅O₁₂ dans de l'éthanol absolu à 10g/L avec quelques ppm d'acide citrique.

Une suspension de matériau de cathode a été obtenue par broyage/dispersion de LiMn₂O₄ dans de l'éthanol absolu à 25 g/L. La suspension de cathode a ensuite été diluée dans l'acétone jusqu'à une concentration de 5 g/L.

La suspension de matériau d'électrolyte céramique a été obtenue par broyage/dispersion de poudre de Li₃Al_{0,4}Sc_{1,6}(PO₄)₃ dans de l'éthanol absolu à 5 g/L.

Pour toutes ces suspensions, les broyages ont été conduits de manière à obtenir des suspensions stables avec des tailles de particules inférieures à 100 nm.

Les électrodes négatives ont été préparées par dépôt électrophorétique des nanoparticules de Li₄Ti₅O₁₂ contenues dans la suspension préalablement préparée. Le film mince de Li₄Ti₅O₁₂ (environ 1 micron) a été déposé sur les deux faces du substrat. Ces électrodes négatives ont ensuite été traitées thermiquement à 600°C.

Les électrodes positives ont été préparées de la même manière, par dépôt électrophorétique à partir de la suspension de LiMn₂O₄. Le film mince de LiMn₂O₄ (environ 1 µm) a été déposé sur les deux faces du substrat. Les électrodes positives ont ensuite été traitées à 600°C.

Après traitement thermique, les électrodes négatives et les électrodes positives ont été recouvertes d'une couche d'électrolyte céramique Li₃Al_{0,4}Sc_{1,6}(PO₄)₃ par EPD. L'épaisseur de LASP a été mesurée et est d'environ 500 nm sur chaque électrode. Ces films d'électrolyte ont ensuite été séchés et consolidés par traitement thermique.

La formulation de polymère utilisée pour faire l'assemblage de la cellule batterie a été constituée de polyéthylène glycol monométhylacrylate avec un liquide ionique 1-butyl-3-méthylimidazolium tétrafluoroborate [BMIm][BF4] (en proportion massique d'environ 3 : 7) et un sel de lithium (lithium (lithium bis(trifluoromethansulfonyl)imide ou LiTFSI). Un photoinitiateur (environ 1% en masse), en l'occurrence 2,2'-diméthoxy-2-phénylacétophénone (Irgacure™ 651, Ciba-Geigy) a été ajouté. La réticulation a été obtenue par irradiation à 366 nm pendant 10 minutes à température ambiante, sous atmosphère d'argon.

Les électrodes revêtues d'un film d'électrolyte solide ont ensuite été revêtues d'une fine couche de polymères liquide ionique par dip-coating (trempé suivi d'un séchage). L'empilement des anodes et cathodes a ensuite été réalisé afin d'obtenir un empilement multicouche. L'ensemble a été maintenu sous pression pendant 15 minutes à 100°C pour réaliser l'assemblage.

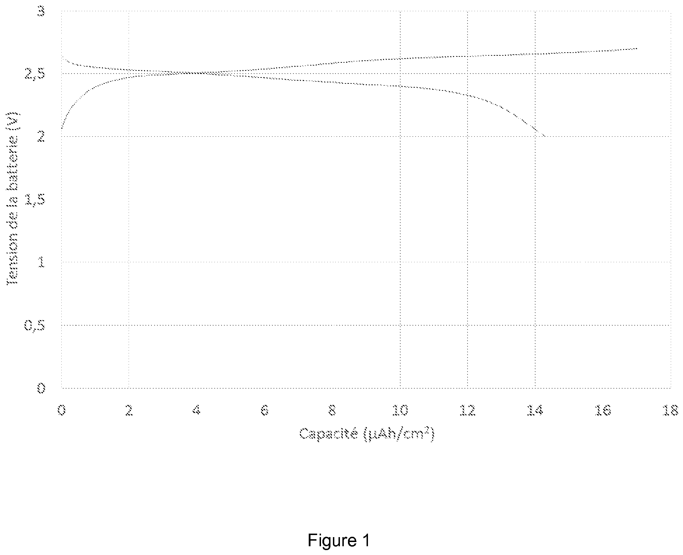

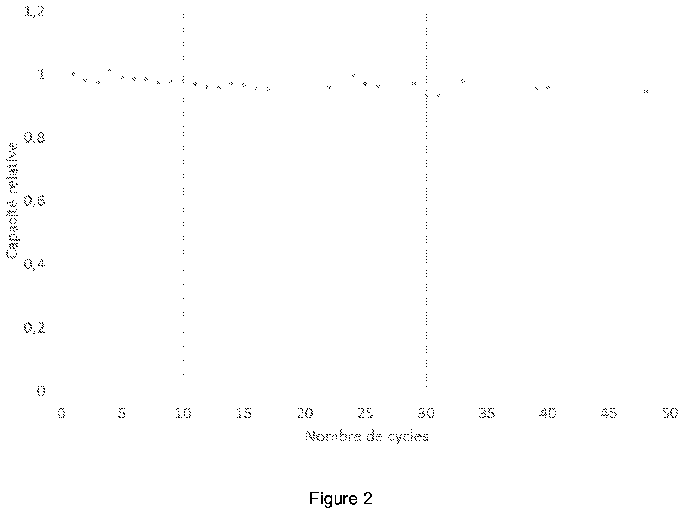

La batterie ainsi obtenue a été cyclée entre 2 et 2,7 V, et les figures 1 et 2 illustrent les courbes de charge/décharge obtenues.

## Revendications

1. Procédé de fabrication d'une batterie en couches minces entièrement solide comprenant les étapes successives suivantes :
a) on dépose une couche comprenant au moins un matériau d'anode (appelée ici « couche de matériau d'anode ») sur son substrat conducteur, de préférence sélectionné dans le groupe formé par une feuille métallique, une bande métallique, une feuille isolante métallisée, une bande isolante métallisée, un film isolant métallisé, lesdits substrats conducteurs, ou leurs éléments conducteurs, pouvant servir comme collecteur de courant anodique ;
b) on dépose une couche comprenant au moins un matériau de cathode (appelée ici « couche de matériau de cathode ») sur son substrat conducteur, de préférence sélectionné dans le groupe formé par une feuille métallique, une bande métallique, une feuille isolante métallisée, une bande isolante métallisée, un film isolant métallisé, lesdits substrats conducteurs, ou leurs éléments conducteurs, pouvant servir comme collecteur de courant cathodique, étant entendu que les étapes a) et b) peuvent être inversées ;
c) on dépose une couche comprenant au moins un matériau d'électrolyte solide (appelée ici « couche de matériau d'électrolyte ») sur au moins une couche obtenue à l'étape a) et/ou b) ;
d) on dépose une couche d'un matériau polymère réticulé, choisi de préférence parmi les polyméthacrylates de méthyle, les polyamines, les polyimides ou les polysiloxanes, comportant des groupements ioniques dont l'épaisseur est inférieure à 10 µm, de préférence inférieure à 5 µm, et encore plus préférentiellement inférieure à 2 µm :
∘ soit sur la couche de matériau d'anode revêtue d'une couche de matériau d'électrolyte solide et/ou sur la couche de matériau de cathode revêtue ou non d'une couche de matériau d'électrolyte solide ;
∘ soit sur la couche de matériau de cathode revêtue d'une couche de matériau d'électrolyte solide et/ou sur la couche de matériau d'anode revêtue ou non d'une couche de matériau d'électrolyte solide ;
e) on empile face sur face successivement une couche de matériau d'anode obtenue à l'étape a), c) ou d) avec une couche de matériau de cathode obtenue à l'étape b), c) ou d), étant entendu que l'empilement comprend au moins une couche de matériau d'électrolyte solide obtenue à l'étape c) et au moins une couche d'un matériau polymère réticulé obtenue à l'étape d) ;
f) on effectue un traitement thermique et/ou une compression mécanique de l'empilement obtenu à l'étape e) pour obtenir une batterie en couches minces entièrement solide.

2. Procédé selon la revendication 1, **caractérisé en ce que** les groupements ioniques du matériau polymère sont choisis parmi les cations suivants : l'imidazolium, le pyrazolium, le tétrazolium le pyridinium, le pyrrolidinium, tel que le n-propyl-n-methylpyrrolidinium (appelé aussi PYR₁₃) ou le n-butyl-n-methylpyrrolidinium (appelé aussi PYR₁₄), l'ammonium, le phosphonium ou le sulfonium ; et/ou parmi les anions suivants : le bis(trifluoromethane)sulfonimide, le bis(fluorosulfonyl)imide, ou le n-(nonafluorobutanesulfonyle)-n-(trifluoromethanesulfonyle)-imide.

3. Procédé selon l'une quelconque des revendications 1 ou 2, **caractérisé en ce que** le matériau polymère réticulé est obtenu par une étape de polymérisation d'un mélange de monomères et/ou oligomères et/ou pré-polymères comprenant un ou plusieurs groupements polymérisables par voie thermique ou photochimique, ledit mélange de monomères et/ou oligomères et/ou pré-polymères comprenant un ou plusieurs groupements réactifs permettant le greffage desdits groupements ioniques, ladite polymérisation par voie thermique et/ou photochimique étant réalisée de préférence directement sur la ou les couche(s) d'anodes, de cathodes et/ou d'électrolytes.

4. Procédé selon l'une quelconque des revendications 1 ou 2, **caractérisé en ce que** le dépôt du matériau polymère réticulé comportant des groupements ioniques est réalisé parmi l'une au moins des techniques suivantes : par trempage-retrait (dip-coating), par trempage-tournette (spin-coating), enduction au rouleau (roll coating), racle (doctor blade), électropulvérisation, ou électrophorèse.

5. Procédé selon l'une quelconque des revendications 1 à 4, **caractérisé en ce que** les couches d'anode, de cathode et d'électrolyte solide sont déposées parmi au moins l'une des techniques suivantes :
(i) dépôt physique par phase vapeur (PVD), et plus particulièrement par évaporation sous vide, par ablation laser, par faisceau d'ions, par pulvérisation cathodique ;
(ii) dépôt chimique par phase vapeur (CVD), et plus particulièrement assisté par plasma (PECVD), assisté par laser (LACVD), ou assisté par aérosol (AA-CVD) ;
(iii) électropulvérisation ;
(iv) électrophorèse ;
(v) aérosol déposition ;
(vi) sol-gel ;
(vii)trempage, plus particulièrement par trempage-retrait (dip-coating), trempage-tournette (spin-coating), ou par le procédé Langmuir-Blodgett,
et sont de préférence réalisées par un dépôt de nanoparticules respectivement de matériau d'anode, de cathode ou d'électrolyte parmi l'une au moins des techniques suivantes : électropulvérisation, électrophorèse, aérosol déposition, trempage,
et sont encore plus préférentiellement toutes déposées par électrophorèse, de préférence à partir de nanoparticules.

6. Procédé selon l'une quelconque des revendications 1 à 5, **caractérisé en ce que** les couches de matériau d'anode et/ou de cathode comprennent en outre des matériaux conducteurs électroniques, et en particulier de graphite, et/ou des nanoparticules de matériaux conducteurs des ions lithium, du type de ceux utilisés pour réaliser les films d'électrolyte, ou des matériaux polymère réticulé comportant des groupements ioniques.

7. Procédé selon l'une quelconque des revendications 1 à 6, **caractérisé en ce que** le traitement thermique est réalisé à une température comprise entre 50°C et 300°C, de préférence entre 100°C et 200°C et/ou **en ce que** la compression mécanique des couches à assembler est réalisée à une pression comprise entre 10 et 100 MPa, de préférence entre 20 et 50 MPa.

8. Procédé selon l'une quelconque des revendications 1 à 7, **caractérisé en ce que**
- la couche de matériau d'anode a) est réalisée à partir d'un matériau choisi parmi :
(i) les oxynitrures d'étain de formule typique SnOₓN_{y} ;
(ii) le phosphate de fer lithié de formule typique LiFePO₄ ;
(iii) les oxynitrures mixtes de silicium et étain de formule typique SiₐSn_{b}O_{y}N_{z} avec a>0, b>0, a+b≤2, 0<y≤4, 0<z≤3 (appelés aussi SiTON), et en particulier le SiSn_{0,87}O_{1,2}N_{1,72} ; ainsi que les oxynitrures-carbures de formule typique SiₐSn_{b}C_{c}O_{y}N_{z} avec a>0, b>0, a+b≤2, 0<c<10, 0<y<24, 0<z<17; SiₐSn_{b}C_{c}O_{y}N_{z}Xₙ avec au moins un des éléments parmi F, Cl, Br, I, S, Se, Te, P, As, Sb, Bi, Ge, Pb et a>0, b>0, a+b>0, a+b≤2, 0<c<10, 0<y<24 et 0<z<17; et SiₐSn_{b}O_{y}N_{z}Xₙ avec au moins un des éléments parmi F, Cl, Br, I, S, Se, Te, P, As, Sb, Bi, Ge, Pb et a>0, b>0, a+b≤2, 0<y≤4 et 0<z≤3;
(iv) les nitrures de type SiₓN_{y} en particulier avec x=3 et y=4, SnₓN_{y} en particulier avec x=3 et y=4, ZnₓN_{y} en particulier avec x=3 et y=4, Li₃₋ₓMₓN avec M = Co, Ni, Cu ;
(v) les oxydes SnO₂, Li₄Ti₅O₁₂, SnB_{0,6}P_{0,4}O_{2,9} et TiO₂;
et/ou **en ce que** :
- la couche de matériau de cathode b) est réalisée à partir d'un matériau de cathode choisi parmi :
∘ les oxydes LiMn₂O₄, LiCoO₂, LiNiO₂, LiMn_{1,5}Ni_{0,5}C₄, LiMn_{1,5}Ni_{0,5-x}XₓO₄ où x est sélectionné parmi Al, Fe, Cr, Co, Rh, Nd, autres terres rares, et où 0 < x < 0,1, LiFeO₂, LiMn_{1/3}Ni_{1/3}Co_{1/3}O₄;
∘ les phosphates LiFePO₄, LiMnPO₄, LiCoPO₄, LiNiPO₄, Li₃V₂(PO₄)₃ ; les phosphates de formule LiMM'PO₄, avec M et M' sélectionnés parmi Fe, Mn, Ni, Co, V et avec M # M';
∘ toutes les formes lithiées des chalcogénides suivants : V₂O₅, V₃O₈, TiS₂, les oxysulfures de titane TiO_{y}S_{z}, les oxysulfures de tungstène WO_{y}S_{z}, CuS, CUS₂,
et/ou **en ce que** :
- la couche de matériau d'électrolyte c) est réalisée à partir de matériau d'électrolyte choisi parmi :
∘ les grenats de formule
Li_{d} A¹ₓ A²_{y}(TO₄)_{z}
où
▪ A¹ représente un cation de degré d'oxydation +II, de préférence Ca, Mg, Sr, Ba, Fe, Mn, Zn, Y, Gd ; et où
▪ A² représente un cation de degré d'oxydation +III, de préférence Al, Fe, Cr, Ga, Ti, La ; et où
▪ (TO₄) représente un anion dans lequel T est un atome de degré d'oxydation +IV, situé au centre d'un tétraèdre formé par les atomes d'oxygène, et dans lequel TO₄ représente avantageusement l'anion silicate ou zirconate, sachant que tout ou partie des éléments T d'un degré d'oxydation +IV peuvent être remplacés par des atomes d'un degré d'oxydation +III ou +V, tels que Al, Fe, As, V, Nb, In, Ta ;
▪ sachant que : d est compris entre 2 et 10, préférentiellement entre 3 et 9, et encore plus préférentiellement entre 4 et 8 ; x est de 3 mais peut être compris entre 2,6 et 3,4, de préférence entre 2,8 et 3,2 ; y est de 2 mais peut être compris entre 1,7 et 2,3, de préférence entre 1,9 et 2,1, et z est de 3 mais peut être compris entre 2.9 et 3.1;
∘ les grenats, de préférence choisi parmi : le Li₇La₃Zr₂O₁₂; le Li₆La₂BaTa₂O₁₂ ; le Li_{5,5}La₃Nb_{1,75}In_{0.25}O₁₂ ; le Li₅La₃M₂O₁₂ avec M = Nb ou Ta ou un mélange des deux composés ; le Li₇₋ₓBaₓLa₃₋ₓM₂O₁₂ avec 0≤x≤1 et M = Nb ou Ta ou un mélange des deux composés ; le Li₇₋ₓLa₃Zr₂₋ₓMₓO₁₂ avec 0≤x≤2 et M = Al, Ga ou Ta ou un mélange de deux ou trois de ces composés ;
∘ les phosphates lithiés, de préférence choisi parmi : le Li₃PO₄; le Li₃(Sc₂₋ₓMₓ)(PO₄)₃ avec M=AI ou Y et 0 ≤ x ≤ 1 ; le Li₁₊ₓMₓ(SC)₂₋ₓ(PO₄)₃ avec M = Al, Y, Ga ou un mélange des trois composés et 0 ≤ x ≤ 0,8 ; le Li₁₊ₓMₓ(Ga_{1-y}SC_{y})₂₋ₓ(PO₄)₃ avec 0 ≤ x ≤ 0,8 ; 0 ≤ y ≤ 1 et M= Al ou Y ou un mélange des deux composés; le Li₁₊ₓMₓ(Ga)₂₋ₓ(PO₄)₃ avec M = Al, Y ou un mélange des deux composés et 0 ≤ x ≤ 0,8 ; le Li₁₊ₓAlₓTi₂₋ₓ(PO₄)₃ avec 0 ≤ x ≤ 1, ou le Li₁₊ₓAlₓGe₂₋ₓ(PO₄)₃ avec 0 ≤ x ≤ 1 ; ou le Li_{1+x+z}Mₓ(Ge_{1-y}Ti_{y})₂₋ₓSi_{z}P_{3-z}O₁₂ avec 0≤x≤0,8 et 0≤y≤1,0 & 0≤z≤0,6 et M= Al, Ga ou Y ou un mélange de deux ou trois de ces composés ; le Li_{3+y}(Sc₂₋ₓMₓ)Q_{y}P_{3-y}O₁₂, avec M = Al et/ou Y et Q = Si et/ou Se, 0 ≤ x ≤ 0,8 et 0 ≤ y ≤ 1 ; ou le Li_{1+x+y}MₓSc₂₋ₓQ_{y}P_{3-y}O₁₂, avec M = Al, Y, Ga ou un mélange des trois composés et Q = Si et/ou Se, 0 ≤ x ≤ 0,8 et 0 ≤ y ≤ 1 ; ou le Li_{1+x+y+z}Mₓ(Ga_{1-y}Sc_{y})₂₋ₓQ_{z}P_{3-z}O₁₂ avec 0 ≤ x ≤ 0,8 ; 0 ≤ y ≤ 1 ; 0 ≤ z ≤ 0,6 avec M = Al ou Y ou un mélange des deux composés et Q= Si et/ou Se ; ou Li₁₊ₓNₓM₂₋ₓP₃O₁₂, avec 0 ≤ x < 1 et N= Cr et/ou V, M = Sc, Sn, Zr, Hf, Se ou Si, ou un mélange de ces composés ;
∘ les borates lithiés, de préférence choisi parmi : le Li₃(Sc₂₋ₓMₓ)(BO₃)₃ avec M=AI ou Y et 0 ≤ x ≤ 1 ; le Li₁₊ₓMₓ(Sc)₂₋ₓ(BO₃)₃ avec M = Al, Y, Ga ou un mélange des trois composés et 0 ≤ x ≤ 0,8 ; 0 ≤ y ≤ 1 ; le Li₁₊ₓMₓ(Ga_{1-y}Sc_{y})₂₋ₓ(BO₃)₃ avec 0 ≤ x ≤ 0,8 ; 0 ≤ y ≤ 1 et M= Al ou Y ; le Li₁₊ₓMₓ(Ga)₂₋ₓ(BO₃)₃ avec M = Al, Y ou un mélange des deux composés et 0 ≤ x ≤ 0,8 ; 0 ≤ y ≤ 1 ; le Li₃BO₃, le Li₃BO₃-Li₂SO₄, le Li₃BO₃-Li₂SiO₄, le Li₃BO₃-Li₂SiO₄-Li₂SO₄ ;
∘ les oxynitrures, de préférence choisis parmi Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les matériaux à base d'oxynitrures de lithium de phosphore ou de bore, appelés LiPON et LIBON, pouvant également contenir du silicium, du soufre, du zirconium, de l'aluminium, ou une combinaison d'aluminium, bore, soufre et/ou silicium, et du bore pour les de lithium de phosphore ;
∘ les oxydes lithiés, de préférence choisis parmi le Li₇La₃Zr₂O₁₂ ou le Li₅₊ₓLa₃(Zrₓ,A₂₋ₓ)O₁₂ avec A=Sc, Y, Al, Ga et 1,4 ≤ x ≤ 2 ou le Li_{0,35}La_{0.55}TiO₃ ;
∘ les silicates, de préférence choisis parmi Li₂Si₂O₅, Li₂SiO₃, Li₂Si₂O₆, LiAlSiO₄, Li₄SiO₄, LiAlSi₂O₆.

9. Procédé selon l'une quelconque des revendications 1 à 8, **caractérisé en ce qu'**il comprend en outre une étape g) d'encapsulation de la batterie obtenue à l'étape f) par dépôt d'au moins une couche d'encapsulation de matériau céramique, vitreux ou vitrocéramique, et de préférence on réalise des terminaisons anodiques et cathodiques par métallisation des sections découpées, de préférence par dépôt d'une couche d'étain éventuellement déposé sur une première sous couche de nickel et/ou de résine époxy chargé en particules métalliques.

10. Procédé selon l'une quelconque des revendications 5 à 9, **caractérisé en ce que** la taille des nanoparticules de matériaux d'électrolyte est inférieure à 100 nm, de préférence inférieure à 30 nm, lorsque les couches d'anode et/ou de cathode et/ou d'électrolyte sont réalisées par un dépôt de nanoparticules respectivement de matériau d'anode, de cathode ou d'électrolyte parmi l'une au moins des techniques suivantes : électropulvérisation, électrophorèse, aérosol déposition, trempage.

11. Procédé selon l'une quelconque des revendications 1 à 10, **caractérisé en ce que** les substrats conducteurs sont en aluminium, en cuivre, en acier inoxydable, en titane ou en nickel, de préférence en nickel, et éventuellement revêtus d'un métal noble choisi parmi les métaux suivants : l'or, le platine, le palladium, le vanadium, le cobalt, le nickel, le manganèse, de niobium, le tantale, le chrome, le molybdène, le titane, le palladium, le zirconium, le tungstène ou tout alliage comprenant au moins un de ces métaux.

12. Batterie, présentant de préférence une capacité surfacique de la cathode supérieure ou égale à la capacité surfacique de l'anode, comprenant successivement :
a) un premier substrat conducteur,
b) une couche comprenant au moins un matériau d'anode (appelée ici «couche d'anode») déposée sur ce premier substrat conducteur,
c) optionnellement, une couche comprenant au moins un matériau d'électrolyte solide déposée sur au moins une couche comprenant au moins un matériau d'anode,
d) une couche d'un matériau polymère réticulé comportant des groupements ioniques dont l'épaisseur est inférieure à 10 µm, de préférence inférieure à 5 µm, et encore plus préférentiellement inférieure à 2 µm, déposée soit sur la couche de matériau d'anode soit sur la couche de matériau d'anode revêtue d'une couche de matériau d'électrolyte solide,
e) optionnellement, une seconde couche d'un matériau polymère réticulé comportant des groupements ioniques dont l'épaisseur est inférieure à 10 µm, de préférence inférieure à 5 µm, et encore plus préférentiellement inférieure à 2 µm, déposée sur la couche d'un matériau polymère réticulé comportant des groupements ioniques,
f) optionnellement, une couche comprenant au moins un matériau d'électrolyte solide déposée sur ladite couche d'un matériau polymère réticulé comportant des groupements ioniques,
g) une couche comprenant au moins un matériau de cathode (appelée ici «couche de cathode») déposée sur ladite couche comprenant au moins un matériau d'électrolyte solide ou sur ladite couche d'un matériau polymère réticulé comportant des groupements ioniques,
h) un second substrat conducteur déposé sur la couche comprenant au moins un matériau de cathode,
étant entendu que l'empilement successif comprend au moins une couche comprenant au moins un matériau d'électrolyte solide et au moins une couche d'un matériau polymère réticulé comportant des groupements ioniques.

13. Batterie selon la revendication 12, **caractérisée en ce que** l'empilement des couches de cathode et d'anode est décalé latéralement.

14. Batterie selon l'une quelconque des revendications 12 ou 13, **caractérisée en ce qu'**elle comprend au moins une couche d'encapsulation, de préférence une couche en céramique, en verre ou en vitrocéramique, ladite au moins une couche d'encapsulation revêtant de préférence totalement quatre des six faces de ladite batterie et partiellement les deux faces restantes, située sous les métallisations servant à la connectique de la batterie.

15. Batterie selon la revendication 14, **caractérisée en ce qu'**elle comprend une deuxième couche d'encapsulation déposée sur ladite première couche d'encapsulation, ladite deuxième couche d'encapsulation étant de préférence en silicone.

16. Batterie selon l'une quelconque des revendications 12 à 15 **caractérisée en ce qu'**elle comprend des terminaisons au niveau où les collecteurs de courant cathodique, respectivement anodique, sont apparents, sachant que les connexions anodiques et les connexions cathodiques sont de préférence disposées sur les côtés opposés de l'empilement.

## Patentansprüche

1. Verfahren zur Herstellung einer Dünnschicht-Festkörperbatterie, welches die folgenden aufeinanderfolgenden Schritte umfasst:
a) Aufbringen einer Schicht, die mindestens ein Anodenmaterial (hier bezeichnet als "Anodenmaterialschicht") umfasst, auf ihr leitendes Substrat, das vorzugsweise aus der Gruppe ausgewählt ist, die von einer Metallfolie, einem Metallband, einer metallisierten Isolierfolie, einem metallisierten Isolierband, einem metallisierten Isolierfilm gebildet ist, wobei die leitenden Substrate oder ihre leitenden Elemente als Anodenstromsammler dienen können;
b) Aufbringen einer Schicht, die mindestens ein Kathodenmaterial (hier bezeichnet als "Kathodenmaterialschicht") umfasst, auf ihr leitendes Substrat, das vorzugsweise aus der Gruppe ausgewählt ist, die von einer Metallfolie, einem Metallband, einer metallisierten Isolierfolie, einem metallisierten Isolierband, einem metallisierten Isolierfilm gebildet ist, wobei die leitenden Substrate oder ihre leitenden Elemente als Kathodenstromsammler dienen können, wobei es sich versteht, dass die Schritte a) und b) umkehrbar sind;
c) Aufbringen einer Schicht, die mindestens ein Festelektrolytmaterial (hier bezeichnet als "Elektrolytmaterialschicht") umfasst, auf mindestens eine in Schritt a) und/oder b) erhaltene Schicht;
d) Aufbringen einer Schicht eines vernetzten Polymermaterials, das vorzugsweise aus den Polymethylmethacrylaten, den Polyaminen, den Polyimiden oder den Polysiloxanen ausgewählt ist, aufweisend ionische Gruppen, deren Dicke unter 10 µm, vorzugsweise unter 5 µm und noch viel vorzugsweiser unter 2 µm beträgt:
∘ entweder auf die Anodenmaterialschicht, die mit einer Festelektrolytmaterialschicht beschichtet ist und/oder auf die Kathodenmaterialschicht, die mit einer Festelektrolytmaterialschicht beschichtet ist oder nicht;
∘ oder auf die Kathodenmaterialschicht, die mit einer Festelektrolytmaterialschicht beschichtet ist und/oder auf die Anodenmaterialschicht, die mit einer Festelektrolytmaterialschicht beschichtet ist oder nicht;
e) aufeinanderfolgendes Stapeln, Fläche auf Fläche, einer in Schritt a), c) oder d) erhaltenen Anodenmaterialschicht mit einer in Schritt b), c) oder d) erhaltenen Kathodenmaterialschicht, wobei es sich versteht, dass der Stapel mindestens eine in Schritt c) erhaltene Festelektrolytmaterialschicht und mindestens eine in Schritt d) erhaltene Schicht eines vernetzten Polymermaterials umfasst;
f) Durchführen einer thermischen Behandlung und/oder einer mechanischen Kompression des in Schritt e) erhaltenen Stapels, um eine Dünnschicht-Festkörperbatterie zu erhalten.

2. Verfahren nach Anspruch 1, **dadurch gekennzeichnet, dass** die ionischen Gruppen des Polymermaterials aus den folgenden Kationen ausgewählt sind: Imidazolium, Pyrazolium, Tetrazolium, Pyridinium, Pyrrolidinium wie N-Propyl-N-methylpyrrolidinium (auch als PYR₁₃ bezeichnet) oder N-Butyl-N-methylpyrrolidinium (auch als PYR₁₄ bezeichnet), Ammonium, Phosphonium oder Sulfonium; und/oder aus den folgenden Anionen: Bis(trifluormethan)sulfonimid, Bis(fluorsulfonyl)imid oder N-(Nonafluorbutansulfonyl)-N-(trifluormethansulfonyl)-imid.

3. Verfahren nach einem der Ansprüche 1 oder 2, **dadurch gekennzeichnet, dass** das vernetzte Polymermaterial durch einen Polymerisationsschritt eines Gemischs aus Monomeren und/oder Oligomeren und/oder Prä-Polymeren erhalten wird, umfassend eine oder mehrere auf thermischem oder photochemischem Weg polymerisierbare Gruppen, wobei das Gemisch aus Monomeren und/oder Oligomeren und/oder Prä-Polymeren eine oder mehrere reaktive Gruppen umfasst, die das Pfropfen der ionischen Gruppen gestattet, wobei die Polymerisation auf thermischem und/oder photochemischem Weg vorzugsweise direkt auf der oder den Anoden-, Kathoden- und/oder Elektrolytschicht(en) durchgeführt wird.

4. Verfahren nach einem der Ansprüche 1 oder 2, **dadurch gekennzeichnet, dass** Aufbringen des vernetzten Polymermaterials, das ionische Gruppen umfasst, mit mindestens einer der folgenden Techniken durchgeführt wird: durch Tauchbeschichtung (dip-coating), durch Rotationsbeschichtung (spin-coating), Walzenbeschichtung (roll coating), Rakel (doctor blade), Elektrosprayen oder Elektrophorese.

5. Verfahren nach einem der Ansprüche 1 bis 4, **dadurch gekennzeichnet, dass** die Anoden-, Kathoden- und Festelektrolytschichten mit mindestens einer der folgenden Techniken aufgebracht werden:
(i) physikalisches Aufbringen durch Dampfphase (PVD) und insbesondere durch Vakuumverdampfen, durch Laserablation, durch Ionenstrahl, durch Sputtern;
(ii) chemisches Aufbringen durch Dampfphase (CVD) und insbesondere unterstützt durch Plasma (PECVD), unterstützt durch Laser (LACVD) oder unterstützt durch Aerosol (AA-CVD);
(iii) Elektrosprayen;
(iv) Elektrophorese;
(v) Aerosoldepot;
(vi) Sol-Gel;
(vii) Tauchen, insbesondere durch Tauchbeschichtung (dip-coating), Rotationsbeschichtung (spin-coating) oder durch das Langmuir-Blodgett-Verfahren,
und vorzugsweise durch ein Aufbringen von Nanopartikeln jeweils von Anoden-, Kathoden- oder Elektrolytmaterial mit mindestens einer der folgenden Techniken durchgeführt werden: Elektrosprayen, Elektrophorese, Aerosoldepot, Tauchen,
und noch vorzugsweiser alle durch Elektrophorese, vorzugsweise auf der Basis von Nanopartikeln aufgebracht werden.

6. Verfahren nach einem der Ansprüche 1 bis 5, **dadurch gekennzeichnet, dass** die Anoden- und/oder Kathodenmaterialschichten ferner elektronisch leitende Materialien umfassen und vor allem Graphit und/oder Nanopartikel leitender Materialien der Lithiumionen vom Typ derjenigen, die verwendet werden, um Elektrolytfolien herzustellen oder vernetzte Polymermaterialien, die ionische Gruppen aufweisen.

7. Verfahren nach einem der Ansprüche 1 bis 6, **dadurch gekennzeichnet, dass** die thermische Behandlung bei einer Temperatur durchgeführt wird, die zwischen 50 °C und 300 °C, vorzugsweise zwischen 100 °C und 200 °C, liegt und/oder dass die mechanische Kompression der zu verbindenden Schichten bei einem Druck durchgeführt wird, der zwischen 10 und 100 MPa, vorzugsweise zwischen 20 und 50 MPa, liegt.

8. Verfahren nach einem der Ansprüche 1 bis 7, **dadurch gekennzeichnet, dass**
- die Anodenmaterialschicht a) aus einem Material hergestellt ist, das ausgewählt ist aus:
(i) den Zinn-Oxinitriden mit der typischen Formel SnOₓN_{y};
(ii) dem lithiierten Eisenphosphat mit der typischen Formel LiFePO₄;
(iii) den gemischten Silicium- und Zinn-Oxynitriden mit der typischen Formel SiₐSn_{b}O_{y}N_{z} mit a>0, b>0, a+b≤2, 0 < y ≤ 4, 0 < z ≤ 3 (ebenfalls bezeichnet als SiTON) und vor allem SiSn_{0,87}O_{1,2}N_{1,72}; sowie den Carbid-Oxynitriden mit der typischen Formel SiₐSn_{b}C_{c}O_{y}N_{z} mit a>0, b>0, a+b≤2, 0 < c < 10, 0 < y < 24, 0 < z < 17; SiₐSn_{b}C_{c}O_{y}N_{z}Xₙ mit Xₙ mindestens eins der Elemente von F, Cl, Br, I, S, Se, Te, P, As, Sb, Bi, Ge, Pb und a>0, b>0, a+b>0, a+b≤2, 0 < c < 10, 0 < y < 24 und 0 < z < 17; und SiₐSn_{b}O_{y}N_{z}Xₙ mit Xₙ mindestens eins der Elemente von F, Cl, Br, I, S, Se, Te, P, As, Sb, Bi, Ge, Pb und a>0, b>0, a+b≤2, 0 < y ≤ 4 und 0 < z ≤ 3;
(iv) den Nitriden vom Typ SiₓN_{y} insbesondere mit x=3 und y=4, SnₓN_{y} insbesondere mit x=3 und y=4, ZnₓN_{y} insbesondere mit x=3 und y=4, Li₃₋ₓMₓN mit M = Co, Ni, Cu;
(v) den Oxiden SnO₂, Li₄Ti₅O₁₂, SnB_{0,6}P_{0,4}O_{2,9} und TiO₂, und/oder dass:
- die Kathodenmaterialschicht b) aus einem Kathodenmaterial hergestellt ist, das ausgewählt ist aus:
∘ den Oxiden LiMn₂O₄, LiCoO₂, LiNiO₂, LiMn_{1,5}Ni_{0,5}O₄, LiMn_{1,5}Ni_{0,5-x}XₓO₄, wobei x aus Al, Fe, Cr, Co, Rh, Nd, anderen seltenen Erden ausgewählt ist, und wobei 0<x<0,1, LiFeO₂, LiMn_{1/3}Ni_{1/3}Co_{1/3}O₄ ist;
∘ den Phosphaten LiFePO₄, LiMnPO₄, LiCoPO₄, LiNiPO₄, Li₃V₂(PO₄)₃; den Phosphaten der Formel LiMM'PO₄, mit M und M' ausgewählt aus Fe, Mn, Ni, Co, V und mit M ≠ M';
∘ allen lithiierten Formen der folgenden Chalcogenide: V₂O₅, V₃O₈, TiS₂, den Titan-Oxisulfiden TiO_{y}S_{z}, den Wolfram-Oxisulfiden WO_{y}S_{z}, CuS, CuS₂,
und/oder dass:
- die Elektrolytmaterialschicht c) aus Elektrolytmaterial hergestellt ist, das ausgewählt ist aus:
∘ den Granaten der Formel
Li_{d}A¹ₓA²_{y}(TO₄)_{z},
wobei
▪ A¹ ein Kation mit einer Oxidationsstufe +II, vorzugsweise Ca, Mg, Sr, Ba, Fe, Mn, Zn, Y, Gd darstellt; und wobei
▪ A² ein Kation mit einer Oxidationsstufe +III, vorzugsweise Al, Fe, Cr, Ga, Ti, La darstellt; und wobei
▪ (TO₄) ein Anion darstellt, wobei T ein Atom mit einer Oxidationsstufe +IV ist, das sich im Zentrum eines Tetraeders befindet, der von den Sauerstoffatomen gebildet ist, und wobei TO₄ in vorteilhafter Weise das Silicat- oder Zirconatatom darstellt, wobei alle oder ein Teil der Elemente T mit einer Oxidationsstufe +IV durch Atome mit einer Oxidationsstufe +III oder +V ersetzbar sind, wie Al, Fe, As, V, Nb, In, Ta;
▪ wobei: d zwischen 2 und 10, vorzugsweise zwischen 3 und 9, und noch vorzugsweiser zwischen 4 und 8 liegt; x 3 beträgt, aber zwischen 2,6 und 3,4, vorzugsweise zwischen 2,8 und 3,2, liegen kann; y 2 beträgt, aber zwischen 1,7 und 2,3, vorzugsweise zwischen 1,9 und 2,1 liegen kann und z 3 beträgt, aber zwischen 2,9 und 3,1 liegen kann;
∘ den Granaten, die vorzugsweise ausgewählt sind aus: Li₇La₃Zr₂O₁₂; Li₆La₂BaTa₂O₁₂; Li_{5,5}La₃Nb_{1,75}ln_{0,25}O₁₂; Li₅La₃M₂O₁₂ mit M = Nb oder Ta oder einem Gemisch der zwei Verbindungen; Li₇₋ₓBaₓLa₃₋ₓM₂O₁₂ mit 0 ≤ x ≤1 und M = Nb oder Ta oder einem Gemisch der zwei Verbindungen; Li₇₋ₓLa₃Zr₂₋ₓMₓO₁₂ mit 0 ≤ x ≤ 2 und M = Al, Ga oder Ta oder einem Gemisch von zwei oder drei dieser Verbindungen;
∘ den lithiierten Phosphaten, die vorzugsweise ausgewählt sind aus: Li₃PO₄; Li₃(Sc₂₋ₓMₓ)(PO₄)₃ mit M = Al oder Y und 0 ≤ x ≤ 1; Li₁₊ₓMₓ(Sc)₂₋ₓ(PO₄)₃ mit M = Al, Y, Ga oder einem Gemisch der drei Verbindungen und 0 ≤ x ≤ 0,8; Li₁₊ₓMₓ(Ga_{1-y}Sc_{y})₂₋ₓ(PO₄)₃ mit 0 ≤ x ≤ 0,8; 0 ≤ y ≤ 1 und M = Al oder Y oder einem Gemisch der zwei Verbindungen; Li₁₊ₓMₓ(Ga)₂₋ₓ(PO₄)₃ mit M = Al, Y oder einem Gemisch der zwei Verbindungen und 0 ≤ x ≤ 0,8; Li₁₊ₓAlₓTi₂₋ₓ(PO₄)₃ mit 0 ≤ x ≤ 1, oder Li₁₊ₓAlₓGe₂₋ₓ(PO₄)₃ mit 0 ≤ x ≤ 1; oder Li_{1+x+z}Mₓ(Ge_{1-y}Ti_{y})₂₋ₓSi_{z}P_{3-z}O₁₂ mit 0 ≤ x ≤ 0,8 und 0 ≤ y ≤ 1,0 & 0 ≤ z ≤ 0,6 und M = Al, Ga oder Y oder einem Gemisch von zwei oder drei dieser Verbindungen; Li_{3+y}(Sc₂₋ₓMₓ)Q_{y}P_{3-y}O₁₂, mit M = Al und/oder Y und Q = Si und/oder Se, 0 ≤ x ≤ 0,8 und 0 ≤ y ≤ 1; oder Li_{1+x+y}MₓSc₂₋ₓQ_{y}P_{3-y}O₁₂, mit M = Al, Y, Ga oder einem Gemisch der drei Verbindungen und Q = Si und/oder Se, 0 ≤ x ≤ 0,8 und 0 ≤ y ≤ 1; oder Li_{1+x+y+z}Mₓ(Ga_{1-y}Sc_{y})₂₋ₓQ_{z}P_{3-z}O₁₂ mit 0 ≤ x ≤ 0,8; 0 ≤ y ≤ 1; 0 ≤ z ≤ 0,6 mit M = Al oder Y oder einem Gemisch der zwei Verbindungen und Q=Si und/oder Se; oder Li₁₊ₓNₓM₂₋ₓP₃O₁₂, mit 0 ≤ x ≤ 1 und N=Cr und/oder V, M = Sc, Sn, Zr, Hf, Se oder Si, oder einem Gemisch dieser Verbindungen;
∘ den lithiierten Boraten, die vorzugsweise ausgewählt sind aus: Li₃(Sc₂₋ₓMₓ)(BO₃)₃ mit M = Al oder Y und 0 ≤ x ≤ 1; Li₁₊ₓMₓ(Sc)₂₋ₓ(BO₃)₃ mit M = Al, Y, Ga oder einem Gemisch der drei Verbindungen und 0 ≤ x ≤ 0,8; 0 ≤ y ≤ 1; Li₁₊ₓMₓ(Ga_{1-y}Sc_{y})₂₋ₓ(BO₃)₃ mit 0 ≤ x ≤ 0,8; 0 ≤ y ≤ 1 und M = Al oder Y; Li₁₊ₓMₓ(Ga)₂₋ₓ (BO₃) ₃ mit M = Al, Y oder einem Gemisch der zwei Verbindungen und 0 ≤ x ≤ 0,8; 0 ≤ y ≤ 1; Li₃BO₃, Li₃BO₃-Li₂SO₄, Li₃BO₃-Li₂SiO₄, Li₃BO₃-Li₂SiO₄-Li₂SO₄ ;
∘ den Oxinitriden, die vorzugsweise aus Li₃PO₄₋ₓN_{2x/3}, Li₄SiO₄₋ₓN_{2x/3}, Li₄GeO₄₋ₓN_{2x/3} mit 0 < x < 4 oder Li₃BO₃₋ₓN_{2x/3} mit 0 < x < 3; den Materialien auf der Basis von Lithium-, Phosphor- oder Bor-Oxinitriden, bezeichnet als LiPON und LIBON, die ebenfalls Silicium, Schwefel, Zirconium, Aluminium oder eine Kombination aus Aluminium, Bor, Schwefel und/oder Silicium enthalten können, und Bor für Phosphorlithium ausgewählt sind;
∘ den lithiierten Oxiden, die vorzugsweise aus Li₇La₃Zr₂O₁₂ oder Li₅₊ₓLa₃(Zrₓ,A₂₋ₓ)O₁₂ mit A=Sc, Y, Al, Ga und 1,4 ≤ x ≤ 2 oder Li_{0,35}La_{0,55}TiO₃ ausgewählt sind
∘ den Silikaten, die vorzugsweise aus Li₂Si₂O₅, Li₂SiO₃, Li₂Si₂O₆, LiAlSiO₄, Li₄SiO₄, LiAlSi₂O₆ ausgewählt sind.

9. Verfahren nach einem der Ansprüche 1 bis 8, **dadurch gekennzeichnet, dass** es ferner einen Schritt g) des Verkapselns der in Schritt f) erhaltenen Batterie durch Aufbringen von mindestens einer Verkapselungsschicht aus Keramik-, Glas- oder Glaskeramikmaterial umfasst, und vorzugsweise anodische und kathodische Endungen durch Metallisieren der durchtrennten Querschnitte hergestellt werden, vorzugsweise durch Aufbringen einer Zinnschicht, die eventuell auf eine erste Nickel- und/oder mit Metallpartikeln angereicherte Expoxydharzunterschicht aufgebracht wird.

10. Verfahren nach einem der Ansprüche 5 bis 9, **dadurch gekennzeichnet, dass** die Größe der Elektrolytmaterial-Nanopartikel kleiner als 100 nm, vorzugsweise kleiner als 30 nm, ist, wenn die Anoden- und/oder Kathoden- und/oder Elektrolytschicht durch Aufbringen von Nanopartikeln beziehungsweise von Anoden-, Kathoden- oder Elektrolytmaterial durch mindestens eine der folgenden Techniken hergestellt werden: Elektrosprayen, Elektrophorese, Aerosoldepot, Tauchen,

11. Verfahren nach einem der Ansprüche 1 bis 10, **dadurch gekennzeichnet, dass** die leitenden Substrate aus Aluminium, aus Kupfer, aus rostfreiem Stahl, aus Titan oder aus Nickel, vorzugsweise aus Nickel, sind und eventuell mit einem Edelmetall beschichtet, das aus den folgenden Metallen ausgewählt ist: Gold, Platin, Palladium, Vanadium, Kobalt, Nickel, Mangan, Niobium, Tantal, Chrom, Molybdän, Titan, Palladium, Zirconium, Wolfram oder jeder Legierung, die mindestens eins dieser Metalle enthält.

12. Batterie, die vorzugsweise eine Oberflächenkapazität der Kathode aufweist, die größer oder gleich der Oberflächenkapazität der Anode ist, umfassend aufeinanderfolgend:
a) ein erstes leitendes Substrat,
b) eine Schicht, die mindestens ein Anodenmaterial (hier bezeichnet als "Anodenschicht") umfasst, die auf diesem ersten leitenden Substrat aufgebracht ist,
c) optional eine Schicht, die mindestens ein Festelektrolytmaterial umfasst, die auf mindestens eine Schicht aufgebracht ist, die mindestens ein Anodenmaterial umfasst,
d) eine Schicht eines vernetzten Polymermaterials, das ionische Gruppen aufweist, deren Dicke unter10 µm, vorzugsweise unter 5 µm und noch viel vorzugsweiser unter 2 µm beträgt, die entweder auf die Anodenmaterialschicht oder auf die Kathodenmaterialschicht, die mit einer Festelektrolytmaterialschicht beschichtet ist und/oder auf die Anodenmaterialschicht, die mit einer Festelektrolytmaterialschicht beschichtet ist, aufgebracht ist,
e) optional eine zweite Schicht eines vernetzten Polymermaterials, das ionische Gruppen aufweist, deren Dicke unter 10 µm, vorzugsweise unter 5 µm und noch viel vorzugsweiser unter 2 µm beträgt, die auf die Schicht eines vernetzten Polymermaterials aufgebracht ist, das ionische Gruppen aufweist,
f) optional eine Schicht, die mindestens ein Festelektrolytmaterial umfasst, die auf die Schicht eines vernetzten Polymermaterial aufgebracht ist, das ionische Gruppen aufweist,
g) eine Schicht, die mindestens ein Kathodenmaterial (hier bezeichnet als "Kathodenschicht") umfasst, die auf die Schicht aufgebracht ist, die mindestens ein Festelektrolytmaterial umfasst oder auf die Schicht eines vernetzten Polymermaterials, das ionische Gruppen aufweist,
h) ein zweites leitendes Substrat, das auf die Schicht aufgebracht ist, die mindestens ein Kathodenmaterial umfasst,
wobei es sich versteht, dass der aufeinanderfolgende Stapel mindestens eine Schicht umfasst, die mindestens ein Festelektrolytmaterial umfasst, und mindestens eine Schicht eines vernetzten Polymermaterials, das ionische Gruppen aufweist.

13. Batterie nach Anspruch 12, **dadurch gekennzeichnet, dass** der Stapel der Kathoden- und Anodenschichten seitlich versetzt ist.

14. Batterie nach einem der Ansprüche 12 oder 13, **dadurch gekennzeichnet, dass** sie mindestens eine Kapselschicht, vorzugsweise eine Schicht aus Keramik, aus Glas oder aus Glaskeramik, umfasst, wobei die mindestens eine Kapselschicht vorzugsweise vier der sechs Flächen der Batterie vollständig und die zwei restlichen Flächen teilweise beschichtet, die sich unter den Metallisierungen befinden, die der Verbindungstechnik der Batterie dienen.

15. Batterie nach Anspruch 14, **dadurch gekennzeichnet, dass** sie eine zweite Kapselschicht umfasst, die auf die erste Kapselschicht aufgebracht ist, wobei die zweite Kapselschicht vorzugsweise aus Silikon ist.

16. Batterie nach einem der Ansprüche 12 bis 15, **dadurch gekennzeichnet, dass** sie Enden in dem Bereich umfasst, wo die Kathoden- beziehungsweise Anodenstromsammler sichtbar sind, wobei die Anodenanschlüsse und die Kathodenanschlüsse vorzugsweise auf den gegenüberliegenden Seiten des Stapels angeordnet sind.

## Claims

1. A process for producing an all-solid thin-layer battery including the following series of steps:
a) a layer including at least one anode material (referred to here as "anode material layer") is deposited on its conductive substrate, preferably selected from the group formed by a metal sheet, a metal strip, a metallised insulating sheet, a metallised insulating strip, a metallised insulating film, said conductive substrates, or conductive elements thereof, capable of serving as an anode current collector;
b) a layer including at least one cathode material (referred to here as "cathode material layer") is deposited on its conductive substrate, preferably selected from the group formed by a metal sheet, a metal strip, a metallised insulating sheet, a metallised insulating strip, a metallised insulating film, said conductive substrates, or conductive elements thereof, capable of serving as a cathode current collector, with the understanding that steps a) and b) can be reversed;
c) on at least one layer obtained in step a) and/or b), a layer including at least one solid electrolyte material (referred to here as "electrolyte material layer") is deposited;
d) a layer of a cross-linked polymer material, preferably chosen from polymethyl methacrylates, polyamines, polyimides or polysiloxanes, comprising ionic groups having a thickness of less than 10 µm, preferably less than 5 µm, and even more preferably less than 2 µm, is deposited:
- on the anode material layer coated with a solid electrolyte material layer and/or on the cathode material layer coated or not with a solid electrolyte material layer;
- or on the cathode material layer coated with a solid electrolyte material layer and/or on the anode material layer coated or not with a solid electrolyte material layer;
e) an anode material layer obtained in step a), c) or d) is stacked face to face in series with a cathode material layer obtained in step b), c) or d) with the understanding that the stack includes at least one solid electrolyte material layer obtained in step c) and at least one cross-linked polymer material layer obtained in step d);
f) a heat treatment and/or a mechanical compression of the stack obtained in step e) is carried out in order to obtain an all-solid thin-layer battery.

2. Process according to claim 1, **characterised in that** ionic groups of the polymer material are chosen from the following cations: imidazolium, pyrazolium, tetrazolium, pyridinium, pyrrolidinium, such as n-propyl-n-methylpyrrolidinium (also called PYR₁₃) or n-butyl-n-methylpyrrolidinium (also called PYR₁₉), ammonium, phosphonium or sulfonium; and/or from the following anions: bis(trifluoromethane)sulfonimide, bis(fluorosulfonyl)imide, or n-(nonafluorobutanesulfonyl)-n-(trifluoromethanesulfonyl)-imide.

3. Process according to any one of claims 1 or 2, **characterised in that** the cross-linked polymer material is obtained by a step of polymerisation of a mixture of monomers and/or oligomers and/or pre-polymers including one or more thermally or photochemically polymerisable groups, said mixture of monomers and/or oligomers and/or pre-polymers including one or more reactive groups enabling said ionic groups to be grafted, said thermal and/or photochemical polymerisation preferably being performed directly on the anode, cathode and/or electrolyte layer(s).

4. Process according to any one of claims 1 or 2, **characterised in that** the deposition of the cross-linked polymer material comprising ionic groups is performed using at least one of the following techniques: dip-coating, spin-coating, roll coating, doctor blade, electrospraying or electrophoresis.

5. Process according to any one of claims 1 to 4, **characterised in that** the solid anode, cathode and electrolyte layers are deposited using at least one of the following techniques:
(i) physical vapour deposition (PVD), and more specifically by vacuum evaporation, laser ablation, ion beam, or cathode sputtering;
(ii) chemical vapour deposition (CVD), and more specifically plasma-enhanced chemical vapour deposition (PECVD), laser-assisted chemical vapour deposition (LACVD), or aerosol-assisted chemical vapour deposition (AA-CVD);
(iii) electrospraying;
(iv) electrophoresis;
(v) aerosol deposition;
(vi) sol-gel;
(vii) dipping, more specifically dip-coating, spin-coating or the Langmuir-Blodgett process.
and are preferably produced by a deposition of nanoparticles, respectively, of anode, cathode or electrolyte material using at least one of the following techniques: electrospraying, electrophoresis, aerosol deposition, and dipping,
and are even more preferably all deposited by electrophoresis, preferably from nanoparticles.

6. Process according to any one of claims 1 to 5, **characterised in that** the layers of anode and/or cathode material also include electrically conductive materials, and in particular graphite, and/or nanoparticles of lithium ion conductive materials, of the type used to produce electrolyte films, or cross-linked solid polymer materials comprising ionic groups.

7. Process according to any one of claims 1 to 6, **characterised in that** the heat treatment is performed at a temperature of between 50°C and 300°C, preferably between 100°C and 200°C, and/or the mechanical compression of the layers to be assembled is performed at a pressure of between 10 and 100 MPa, and preferably between 20 and 50 MPa.

8. Process according to any one of claims 1 to 7, **characterised in that** the anode material layer a) is produced from a material chosen from:
(i) tin oxynitrides of typical formula SnOₓN_{y};
(ii) lithiated iron phosphate of typical formula LiFePO₄;
(iii) mixed silicon and tin oxynitrides of typical formula SiₐSn_{b}O_{y}N_{z} with a>0, b>0, a+b≤2, 0<y≤4, 0<z≤3 (also called SiTON), and in particular SiSn_{0.87}O_{1.2}N_{1.72}; as well as oxynitrides-carbides with the typical formula SiₐSn_{b}C_{c}O_{y}N_{z} with a>0, b>0, a+b≤2, 0<c<10, 0<y<24, 0<z<17; SiₐSn_{b}C_{c}O_{y}N_{z}Xₙ with Xₙ at least one of the elements among F, Cl, Br, I, S, Se, Te, P, As, Sb, Bi, Ge, Pb and a>0, b>0, a+b>0, a+b≤2, 0<c<10, 0<y<24 and 0<z<17; and SiₐSn_{b}O_{y}N_{z}Xₙ with Xₙ at least one of the elements among F, Cl, Br, I, S, Se, Te, P, As, Sb, Bi, Ge, Pb and a>0, b>0, a+b≤2, 0<y≤4 and 0<z≤3;
(iv) nitrides of type SiₓN_{y} in particular with x=3 and y=4, SnₓN_{y} in particular with x=3 and y=4, ZnₓN_{y} in particular with x=3 and y=4, Li₃₋ₓMₓN with M = Co, Ni, Cu;
(v) the oxides SnO₂, Li₄Ti₅O₁₂, SnB_{0.6}P_{0.4}O_{2.9} and TiO₂. and/or **in that**:
- the cathode material layer b) is produced from cathode material chosen from:
- the oxides LiMn₂O₄, LiCoO₂, LiNiO₂, LiMn_{1.5}Ni_{0.5}O₄, LiMn_{1.5}Ni_{0.5-x}XₓO₄ wherein X is selected from Al, Fe, Cr, Co, Rh, Nd, other rare earth elements, and wherein 0 < x < 0.1, LiFeO₂, LiMn_{1/3}Ni_{1/3}Co_{1/3}O₄;
- the phosphates LiFePO₄, LiMnPO₄, LiCoPO₄, LiNiPO₄, Li₃V₂ (PO₄) ₃; the phosphates of formula LiMM'PO₄, with M and M' selected from Fe, Mn, Ni, Co, V and with M ≠ M';
- all lithiated forms of the following chalcogenides: V₂O₅, V₃O₈, TiS₂, titanium oxysulphides TiO_{y}S_{z}, tungsten oxysulfides WO_{y}S_{z}, CuS, CUS₂,
and/or **in that**:
- the electrolyte material layer c) is produced from electrolyte material chosen from:
- garnets of formula:
Li_{d}A¹ₓA²_{y}(TO₄)_{z}
wherein:
- A¹ represents a cation of oxidation number +II, preferably Ca, Mg, Sr, Ba, Fe, Mn, Zn, Y, Gd; and wherein
- A² represents a cation of oxidation number +III, preferably Al, Fe, Cr, Ga, Ti, La; and wherein
- (TO₄) represents an anion wherein T is an atom of oxidation number +IV, located at the centre of a tetrahedron formed by oxygen atoms, and wherein TO₄ advantageously represents the silicate or zirconate anion, with the understanding that all or some of the elements T with an oxidation number +IV may be replaced by atoms with an oxidation number +III or +V, such as Al, Fe, As, V, Nb, In, Ta;
- with the understanding that: d is between 2 and 10, preferably between 3 and 9, and even more preferably between 4 and 8; x is 3 but may be between 2.6 and 3.4, preferably between 2.8 and 3.2; y is 2 but may be between 1.7 and 2.3, preferably between 1.9 and 2.1; and z is 3 but may be between 2.9 and 3.1;
- the garnets, preferably chosen from: Li₇La₃Zr₂O₁₂; Li₆La₂BaTa₂O₁₂; Li_{5.5}La₃Nb_{1.75}In_{0.25}O₁₂; Li₅La₃M₂O₁₂ with M = Nb or Ta or a mixture of the two compounds; Li₇₋ₓBaₓLa₃₋ₓM₂O₁₂ with 0 ≤ x ≤ 1 and M = Nb or Ta or a mixture of the two compounds; Li₇₋ₓLa₃Zr₂₋ₓMₓO₁₂ with 0 ≤ x ≤ 2 and M = Al, Ga or Ta or a mixture of two or three of said compounds;
- lithiated phosphates, preferably chosen from: Li₃PO₄; Li₃(Sc₂₋ₓMₓ)(PO₄)₃ with M = Al or Y and 0 ≤ x ≤ 1; Li₁₊ₓMₓ(Sc)₂₋ₓ(PO₄)₃ with M = Al, Y, Ga or a mixture of the three compounds and 0 ≤ x ≤ 0.8; Li₁₊ₓMₓ(Ga_{1-y}Sc_{y})₂₋ₓ(PO₄)₃ with 0 ≤ x ≤ 0.8; 0 ≤ y ≤ 1 and M = Al or Y or a mixture of the two compounds; Li₁₊ₓMₓ(Ga)₂₋ₓ(PO₄)₃ with M = Al, Y or a mixture of the two compounds and 0 ≤ x ≤ 0.8; Li₁₊ₓAlₓTi₂₋ₓ(PO₄)₃ with 0 ≤ x ≤ 1, or Li₁₊ₓAlₓGe₂₋ₓ(PO₄)₃ with 0 ≤ x ≤ 1; or Li_{1+x+z}Mₓ(Ge_{1-y}Ti_{y})₂₋ₓSi_{z}P_{3-z}O₁₂ with 0 ≤ x ≤ 0.8 and 0 ≤ y ≤ 1.0 and 0 ≤ z ≤ 0.6 and M = Al, Ga or Y or a mixture of two or three of said compounds; Li_{3+y}(Sc₂₋ₓMₓ)Q_{y}P_{3-y}O₁₂, with M = Al and/or Y and Q = Si and/or Se, 0 ≤ x ≤ 0.8 and 0 ≤ y ≤ 1; or Li_{1+x+y}MₓSc₂₋ₓQ_{y}P_{3-y}O₁₂, with M = Al, Y, Ga or a mixture of the three compounds and Q = Si and/or Se, 0 ≤ x ≤ 0.8 and 0 ≤ y ≤ 1; or Li_{1+x+y+z}Mₓ(Ga_{1-y}Sc_{y})₂₋ₓQ_{z}P_{3-z}O₁₂ with 0 ≤ x ≤ 0.8; 0 ≤ y ≤ 1; 0 ≤ z ≤ 0.6 with M = Al or Y or a mixture of the two compounds and Q = Si and/or Se; or Li₁₊ₓNₓM₂₋ₓP₃O₁₂, with 0 ≤ x ≤ 1 and N = Cr and/or V, M = Se, Sn, Zr, Hf, Se or Si, or a mixture of these compounds;
- lithiated borates, preferably chosen from: Li₃(Sc₂₋ₓMₓ)(BO₃)₃ with M = Al or Y and 0 ≤ x ≤ 1; Li₁₊ₓMₓ(Sc)₂₋ₓ(BO₃)₃ with M = Al, Y, Ga or a mixture of the three compounds and 0 ≤ x ≤ 0.8; 0 ≤ y ≤ 1; Li₁₊ₓMₓ(Ga_{1-y}Sc_{y})₂₋ₓ(BO₃)₃ with 0 ≤ x ≤ 0.8; 0 ≤ y ≤ 1 and M = Al or Y; Li₁₊ₓMₓ(Ga)₂₋ₓ (BO₃) ₃ with M = Al, Y or a mixture of the two compounds and 0 ≤ x ≤ 0.8; 0 ≤ y ≤ 1; Li₃BO₃, Li₃BO₃-Li₂SO₄, Li₃BO₃-Li₂SiO₄, Li₃BO₃-Li₂SiO₄-Li₂SO₄;
- oxynitrides, preferably chosen from Li₃PO₄₋ₓN_{2x/3}, Li₄SiO₄₋ₓN_{2x/3}, Li₄GeO₄₋ₓN_{2x/3} with 0 < x < 4 or Li₃BO₃₋ₓN_{2x/3} with 0 < x < 3; the materials based on lithium, phosphorus or boron oxynitrides, called LiPON and LIBON, may also contain silicon, sulphur, zirconium, aluminium, or a combination of aluminium, boron, sulphur and/or silicon, and boron for lithium phosphorus;
- lithiated oxides, preferably chosen from Li₇La₃Zr₂O₁₂ or Li₅₊ₓLa₃(Zrₓ,A₂₋ₓ)O₁₂ with A = Sc, Y, Al, Ga and 1.4 ≤ x ≤ 2 or Li_{0.35}La_{0.55}TiO₃;
- silicates, preferably chosen from Li₂Si₂O₅, Li₂SiO₃, Li₂Si₂O₆, LiAlSiO₄, Li₄SiO₄, LiAlSi₂O₆.

9. Process according to any one of claims 1 to 8, **characterised in that** it also includes a step g) of encapsulation of the battery obtained in step f) by deposition of at least one ceramic, vitreous or vitroceramic material encapsulation layer, and preferably anode and cathode terminals are produced by metallisation of the sections cut, preferably by deposition of a tin layer, optionally deposited on a sub-layer of nickel and/or epoxy resin filled with metal particles.

10. Process according to any one of claims 5 to 9, **characterised in that** the size of the nanoparticles of electrolyte material is smaller than 100 nm, and preferably smaller than 30 nm, when the anode and/or cathode and/or electrolyte layers are produced by a deposition of nanoparticles, respectively, of anode, cathode or electrolyte material using at least one of the following techniques: electrospraying, electrophoresis, aerosol deposition, dipping.

11. Process according to any one of claims 1 to 10, **characterised in that** the conductive substrates are made of aluminium, copper, stainless steel, titanium or nickel, preferably nickel, and optionally coated with a noble metal chosen from the following metals: gold, platinum, palladium, vanadium, cobalt, nickel, manganese, niobium, tantalum, chromium, molybdenum, titanium, palladium, zirconium, tungsten or any alloy containing at least one of these metals.

12. Battery, preferably having a surface capacity of the cathode greater than or equal to the surface capacity of the anode, comprising successively:
a) a first conductive substrate,
b) a layer including at least one anode material (referred to here as "anode layer") deposited on this first conductive substrate,
c) optionally, a layer including at least one solid electrolyte material deposited on at least one layer including at least one anode material,
d) a layer of a cross-linked polymer material comprising ionic groups, having a thickness of less than 10 µm, preferably less than 5 µm, and even more preferably less than 2 µm, deposited either on the anode material layer or on the anode material layer coated with a solid electrolyte material layer,
e) optionally, a second layer of cross-linked polymer material comprising ionic groups having a thickness of less than 10 µm, preferably less than 5 µm, and even more preferably less than 2 µm, deposited on the layer of a cross-linked polymer material comprising ionic groups,
f) optionally, a layer including at least one solid electrolyte material deposited on said layer of a cross-linked polymer material comprising ionic groups,
g) a layer including at least one cathode material (referred to here as "cathode layer") deposited on said layer including at least one solid electrolyte material or on said cross-linked polymer material layer comprising ionic groups,
h) a second conductive substrate deposited on the layer including at least one cathode material,
with the understanding that the successive stack includes at least one layer including at least one solid electrolyte material and at least one cross-linked polymer material layer comprising ionic groups.

13. Battery according to claim 12, **characterised in that** the stack of cathode and anode layers is laterally offset.

14. Battery according to any one of claims 12 or 13, **characterised in that** it includes at least one encapsulation layer, preferably a ceramic, glass or vitroceramic layer, said at least one encapsulation layer preferably entirely covering four of the six faces of said battery and partially covers the two remaining faces, located below the metallisations intended for the connections of the battery.

15. Battery according to claim 14, **characterised in that** it includes a second encapsulation layer deposited on said first encapsulation layer, said second encapsulation layer preferably being made of silicon.

16. Battery according to any one of claims 12 to 15 **characterised in that** it includes terminals where the cathode and anode current collectors, respectively, are exposed, with the understanding that the anode connections and the cathode connections are preferably disposed on opposite sides of the stack.
